# EUROPEAN PATENT SPECIFICATION

(11) **EP 1 710 539 B1**
(45) Date of publication and mention of the grant of the patent: **25.01.2012**
(21) Application number: 06014169.4
(22) Date of filing: 17.05.2000
(51) Int. Cl.: G01C 21/26, G01C 21/36, G01C 21/34

(54) **Navigation system and method and recording medium containing navigation software**
Navigationssystem, Navigationsverfahren und Aufzeichnungsmedium mit Navigationssoftware
Système de navigation, procédé et support d'enregistrement avec logiciel de navigation

(30) Priority: 21.05.1999 JP 14226999; 25.05.1999 JP 14444399; 25.05.1999 JP 14510799; 25.05.1999 JP 14510999
(43) Date of publication of application: 11.10.2006
(62) Divisional of application: 00110552.7
(73) Proprietor: CLARION Co., Ltd., Bunkyo-ku, Tokio 112-0001 (JP)
(72) Inventor: Otuka, Jun, Tokyo 112-0001 (JP); Namiki, Takashi, Tokyo 112-0001 (JP)
(74) Representative: Grünecker, Kinkeldey, Stockmair & Schwanhäusser

(56) References cited:
- EP-A- 0 673 010
- EP-A- 0 822 530
- WO-A-97/48065
- US-A- 5 470 233
- US-A- 5 608 635
- US-A- 5 832 408
- US-A- 5 877 751
- US-A- 5 905 451
- PATENT ABSTRACTS OF JAPAN vol. 1999, no. 14, 22 December 1999 (1999-12-22) & JP 11 257983 A (ALPINE ELECTRONICS INC), 24 September 1999 (1999-09-24)

## Description

### BACKGROUND OF THE INVENTION

The present invention relates to improvement in the navigation technology installed on a mobile body such as a car to guide a route and, more particularly, intends to set the desired guidance course arbitrarily by causing the user to select either the destination is used as it is or the destination is newly set again if the destination has already been set in setting the guidance course.

In recent years, the navigation system has been known as the technology that is installed on the mobile body such as the car, etc. to guide such mobile body to the given destination via the optimum route. This navigation system calculates the optimum route to the appointed destination by utilizing map data recorded on the CD-ROM, etc., and then pointing the destination on the map displayed on the screen by a cursor or searching the destination from the data. Then, the navigation system calculates the present location of own car in real time based on the radio wave from the GPS artificial satellite, and then permits the user to come up to the destination without losing the way by guiding the running direction at crossings, branches, etc. along above route by virtue of the screen display, the guidance voice generated by the voice synthesis, or the like.

Also, as such navigation system, such a system has been known that any spots are set between the present location of own car and the destination as routing spots and then the route guidance is carried out along with the user's request by calculating the routes via the routing points.

Further, in recent, such another system has also been known that spot information in which the destination and a plurality of routing spots are set (called the "guidance course" hereinafter) are prepared previously in the database, and then the destination and the routing spots contained in the guidance course can be set at the same time when the user selects the desired guidance course. According to the navigation system of this type, since the destination and a plurality of routing spots can be set at the same time by a single operation to search and select the guidance course, the troublesome operation to set the routing spots many times can be omitted and also the operability can be noticeably improved.

However, in the above prior art, there is such a problem that, since merely the previously defined guidance course can be set, it is difficult to set freely the guidance course desired by the user and thus the convenience of operating the system is not good. For example, if another guidance course is set newly in the situation that the destination has already set, the already-set destination is also canceled automatically and thus the destination must be set again, etc. Thus, the operation becomes complicated.

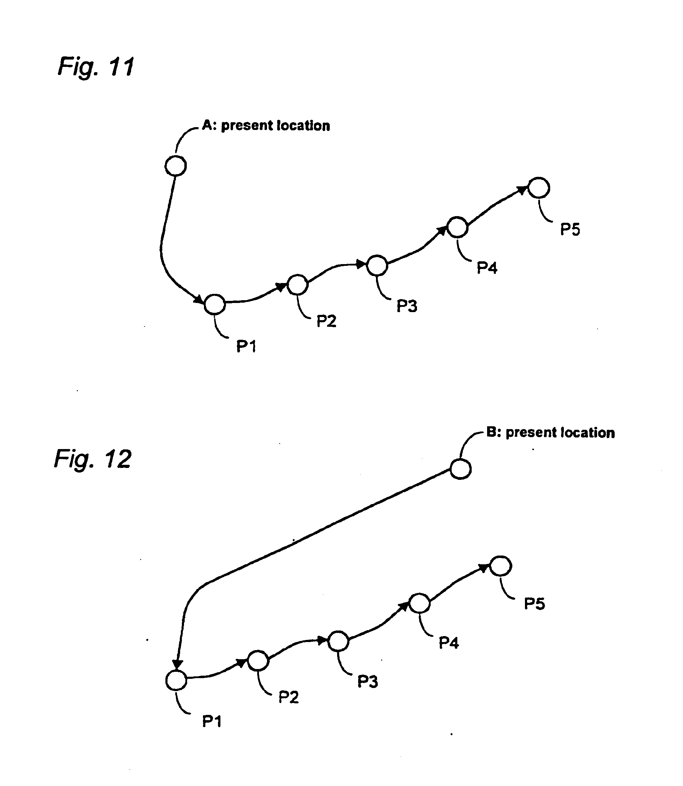

In addition, in the prior art, there is such another problem that it is impossible to change the routing order of respective spots into the reasonable routing order according to the destination. For example, as shown in FIG. 11, if the guidance course is searched via the routing spots in the order of routing spots P1→P2→P3→P4→P5, the route containing the searched guidance course is given by an arrow indicated by a solid line in FIG. 11 when the present location of own car in calculating the route is at the spot A, and thus the car can travel in the reasonable sequence from the present location without loss.

However, the present locations of own cars in calculating the route become various at the moment according to the users. For example, as shown in FIG. 12, if the present location is the spot B which is near the last routing spot P5, the unreasonable running route is set by the routing order of the searched guidance course because the route which causes the car to run to the first routing spot P1 once and then return toward the routing spot P5 is set.

Further, the present invention relates to improvement in the navigation technology installed on a mobile body such as a car to guide a route and, more particularly, intends to allow the edition of the guidance course such as add, delete, change, exchange, etc. of spots.

In recent years, the navigation system has been known as the technology that is installed on the mobile body such as the car, etc. to guide such mobile body to the given destination via the optimum route. This navigation system calculates the optimum route to the appointed destination to guide the route by utilizing map data recorded on the CD-ROM, etc., and then pointing the destination on the map displayed on the screen by a cursor or searching the destination from the data.

More particularly, the navigation system calculates the present location of own car in real time based on the radio wave from the GPS artificial satellite, and then permits the user to come up to the destination without missing the way by guiding the running direction at crossings, branches, etc. along above route by virtue of the screen display, the voice synthesis, or the like.

Also, as such navigation system, such a system has been known that any spots are set between the present location of own car and the destination as routing spots and then the route guidance of the user's requested course is carried out by calculating the routes via respective spots.

Further, in recent, such another system has also been known that point information in which the destination and a plurality of routing points are set (called the "guidance course" hereinafter) are prepared previously in the database such as CD-ROM, and then the route that can reach the destination via the routing points contained in the guidance course can be calculated and set collectively by a single operation that the user selects the desired course.

As an example of such guidance course, there may be considered the course that traces tourist spots in a certain area sequentially. According to the navigation system of this type, since the troublesome operation to set the routing points every visiting spot many times can be omitted, the operability can be remarkably improved.

Meanwhile, in the case that the above guidance course is employed, the contents of the guidance course such as contained spots, the routing order, etc. do not always meet to the user's request according to the circumstances such as the user's fancy, the time allocated to the sightseeing, etc. However, in the above prior art, there is the problem that, since only the previously decided guidance courses can be handled, the guidance of the route along the user's desire becomes difficult and thus the convenience of operating the system is not good.

In other words, in the prior art, in the stage that the contents of the guidance course are displayed prior to the route setting, or after the route extending from the present location to the destination has been calculated and set based on the selected guidance course, the editing of the guidance course such as the add, delete, etc. of the routing spots cannot be carried out. Therefore, it is difficult to employ the guidance of the route arbitrarily along the user's request.

Still further, the present invention relates to improvement in the navigation technology installed on a mobile body such as a car to guide a route and, more particularly, intends to output the guidance suitable for the purpose of course by using the guidance such as the guidance voice which contains the different content from the normal case if the course is employed in setting a route.

In recent years, the navigation system has been known as the technology that is installed on the mobile body such as the car, etc. to guide such mobile body to the given destination via the optimum route. This navigation system calculates the optimum route to the appointed destination to guide the route by utilizing map data recorded on the CD-ROM, etc., and then pointing the destination on the map displayed on the screen by a cursor or searching the destination from the data.

More particularly, the navigation system calculates the present location of own car in real time based on the radio wave from the GPS artificial satellite, and then permits the user to come up to the destination without losing the way by guiding the running direction at crossings, branches, etc. along above route by virtue of the screen display, the guidance voice generated by the voice synthesis, or the like.

The above route guidance is called the navigation. As the above guidance voices, for example, there are "Go to the right at the next branch", "Keep on the left and descend the next O O ramp", "Turn to the right 100 m ahead", etc.

Also, such examples have been known that, for example, the start of navigation is announced by outputting the guidance voice such as "The navigation is started." when the route guidance is started based on the set route, and the end of navigation is announced by outputting the guidance voice such as "We arrive on the destination.", "The navigation is ended." , etc. when the car comes sufficiently close to the destination.

Also, as such navigation system, such a system has been known that any spots are set between the present location of own car and the destination as routing spots (called routing points) and then the route guidance is carried out along with the user's request by calculating the routes via the routing points.

Further, in recent, such another system has also been known that point information in which the destination and a plurality of routing points are set (called the "course" hereinafter) are prepared previously in the database such as CD-ROM, and then the route that can reach the destination via the routing points contained in the course can be calculated and set collectively by a single operation that the user selects the desired course.

As an example of such course, there may be considered the course that traces tourist spots in a certain area sequentially. According to the navigation system of this type, since the troublesome operation to set the routing points every visiting spot many times can be omitted, the operability can be noticeably improved.

However, in the above prior art, there is the problem that the guidance cannot be provided to fit for the purpose of the course. For example, the guidance voice in the navigation in the prior art announces the route that is necessary to reach the next routing point or the destination. Therefore, even if the route is set based on the above course, only the announcement of the route is carried out, like the normal case where the course is not utilized.

Therefore, even if the course constructed for the particular purpose such as the sightseeing, for example, is utilized, the guidance is not carried out by the guidance voice to fit for the purpose of the course unlike the sightseeing guidance such as the history, good point, etc. of the routing points. Thus, it is difficult to use actively the course.

In addition, in the prior art, it is difficult to output the guidance that fits for the purpose of the course at an appropriate timing. In other words, in the course having the particular purpose such as the sightseeing, it is desired that the guidance as for contents of the facilities of the next routing point should be output in the form of guidance voice at such an appropriate timing that the car starts to go to the next routing point after the sightseeing of the certain routing point is finished. However, according to the guidance by the guidance voice in the prior art, such effect is guided at a point of time when the car comes sufficiently close to the routing point or the destination. Hence, such guidance is not output at the above appropriate timing.

Especially, in the prior art, if the present location of own car is near the routing point A, no technology has been known to decide whether own car proceeds toward the next routing point B after the sightseeing of the routing point A, or own car cannot come up to the routing point A to lose the way. Therefore, it is difficult to output the guidance such as the guidance voice, which can meet the purpose of the course, at an appropriate timing.

Still further, the present invention relates to improvement in the navigation technology installed on a mobile body such as a car to guide a route and, more particularly, intends to search easily the guidance course that fits for the user's desire.

In recent years, the navigation system has been known as the technology that is installed on the mobile body such as the car, etc. to guide such mobile body to the given destination via the optimum route. This navigation system calculates the optimum route to the appointed destination to guide the route by utilizing map data recorded on the CD-ROM, etc., and then pointing the destination on the map displayed on the screen by a cursor or searching the destination from the data.

More particularly, the navigation system calculates the present location of own car in real time based on the radio wave from the GPS artificial satellite, and then permits the user to come up to the destination without losing the way by guiding the running direction at crossings, branches, etc. along above route by virtue of the screen display, the guidance voice generated by the voice synthesis, or the like.

Also, as such navigation system, such a system has been known that any spots are set between the present location of own car and the destination as routing spots (called routing points, guidance spots, or transit spots hereinafter) and then the route guidance is carried out along with the user's request by calculating the routes via the routing points.

Further, in recent, such another system has also been known that point information in which the destination and a plurality of routing points are set (called the "guidance course" hereinafter) are prepared previously in the database such as CD-ROM, and then the route that can reach the destination via the routing points contained in the guidance course can be calculated and set collectively by a single operation that the user selects the desired course.

As an example of such course, there may be considered the course that traces tourist spots in a certain area sequentially. According to the navigation system of this type, since the troublesome operation to set the routing points every visiting spot many times can be omitted, the operability can be noticeably improved.

By the way, the user's desire to drive the favorite route is different according to "time" such as the season, the time, etc., "place" such as the present area, etc., and "occasion" such as the feeling, the fellow passenger, the driving object, etc., that is, TOP (Time, Place, Occasion), and the like.

For example, the appropriate theme becomes different according to the season such as "autumn" that is the best season for "Art", and the beautiful night-view location is suitable for the time zone of night. Also, when the available time is short, the guidance course that has colorful contents and needs a long time is not suitable. In addition, there is small necessity for displaying the guidance course located in the too remote area, or rather the contents of display become ready to see when such guidance course is not displayed. Similarly, there is small necessity for displaying the coast guidance course when the user is with the feeling to see the "mountain".

However, in the above prior art, in order to search the desired course among the previously prepared guidance courses, the operation to display the contents by judging based on the names of the guidance courses, that are displayed according to the simple regularity, e.g., in order of the Japanese syllabary, must be tried repeatedly. Therefore, there is the problem that it is difficult to search easily the desired guidance course and thus it takes a lot of time to operate the system.

WO 97/48065 A discloses a computer aided routing system for determining a route along selected waypoints uploaded/downloaded from geocoding devices. The system allows for the selection of (types of) points-of-interest by a user.

US-A-5 905 451 discloses a vehicular navigational system for guiding a driver through an established path to a destination.

### SUMMARY OF THE INVENTION

The present invention has been proposed to overcome the above problems in the prior art, and it is an object of the present invention to provide the navigation technology, i.e., a navigation system and method capable of providing always the effective guidance course to the user by reconstructing the routing order of the spots in the guidance course based on the positional relationship between the present location of own car and the spots, and a recording medium for recording navigation softwares.

The object is achieved by a navigation system for guiding a route of a mobile body, comprising: a section for selecting a desired guidance course from a predetermined start point to a predetermined end point containing routing spots from guidance courses that traces routing spots; a section for calculating a present location of the mobile body; wherein the navigation system further comprises: a section for comparing to which one of a start point and an end point of the guidance course the present location is close if the guidance course is selected; a section for selecting by a user whether or not the routing order is to be inverted if the present location is close to the end point; a section for inverting a routing order of routing spots contained in the guidance course if the user has selected that the routing order of routing spots is to be inverted; and a section for calculating a route via the routing spots in the selected routing order of the selected guidance course. The object is also achieved by a navigation method of guiding a route of a mobile body, comprising the steps of: selecting a desired guidance course from a predetermined start point to a predetermined end point from guidance courses that traces previously decided routing spots; calculating a present location of the mobile body; comparing to which one of a start point and an end point of the guidance course the present location is close if the guidance course is selected; wherein the navigation method further comprises the steps of: selecting by a user whether or not the routing order is to be inverted if the present location is close to the end point; inverting a routing order of routing spots contained in the guidance course if the user has selected that the routing order of routing spots is to be inverted; and calculating a route via the routing spots in the selected routing order of the selected guidance course. The object is also achieved by a recording medium containing navigation software, wherein the software causes the computer to receive a selection of a desired guidance course from a predetermined start point to a predetermined end point from guidance courses that traces previously decided routing spots; calculate a present location of the mobile body; compare to which one of a start point and an end point of the guidance course the present location is close if the guidance course is selected; receive a selection by a user whether or not the routing order is to be inverted if the present location is close to the end point; invert a routing order of routing spots contained in the guidance course if the user has selected that the routing order of routing spots is to be inverted; and calculate a route via the routing spots in the selected routing order of the selected guidance course.

### BRIEF DESCRIPTION OF THE DRAWINGS

FIG. 1 is a functional block diagram showing a configuration not being part of the present invention.
FIG. 2 is a flowchart showing process procedures for reaching the route guidance from the start of selection of the guidance course.
FIG. 3 is a view showing an example of contents of the guidance course.
FIG. 4 is a view showing a display example of the message to ask the user whether or not the already-set destination is used .
FIGS. 5A to 5C are conceptual views showing the route which is set based on the selected course (5B), the case where the already-set destination is used as it is (5A), and the route which is set without the selected course (5C) .

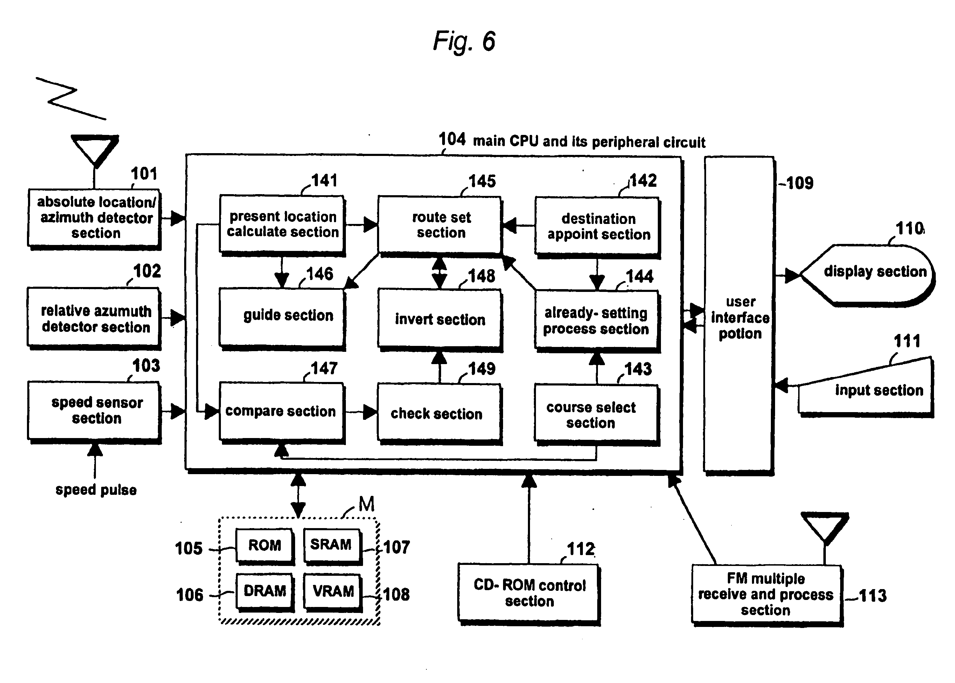

FIG. 6 is a functional block diagram showing a configuration of an embodiment of the present invention.
FIG. 7 is a flowchart showing process procedures for inverting the routing order in the embodiment of the present invention.
FIG. 8 is a view showing an example of contents of the guidance course in the embodiment of the present invention.
FIGS. 9A and 9B are conceptual views showing an example in which the route is set by using the routing order of the guidance course as it is (9B) in the case that own car location is closer to the start point of the guidance course than the end point (9A) in the embodiment of the present invention.
FIGS. 10A and 10B are conceptual views showing an example in which the route is set by inverting the routing order of the guidance course (10B) in the case that own car location is closer to the end point of the guidance course than the start point (10A) in the embodiment of the present invention.
FIG. 11 is a conceptual view showing an example in which a reasonable route is set by calculating the route based on own car location in the prior art.
FIG. 12 is a conceptual view showing an example in which an unreasonable route is set by calculating the route based on own car location in the prior art.
FIG. 13 is a functional block diagram showing another configuration.
FIG. 14 is a view showing an example of a display screen, i.e., editing screen of course information .
FIG. 15 is a flowchart showing process procedures for editing the guidance course .
FIG. 16 is a view showing an example of a display screen for selecting types of the edition of the guidance course having the content shown in FIG. 14 .
FIG. 17 is a view showing a display example of the screen for adding "Ohirabokujo" before "Nishizawakeikoku" in the guidance course having the content shown in FIG. 14, .
FIG. 18 is a view showing a display example of the screen on which "Ohirabokujo" has been added before "Nishizawakeikoku" in the guidance course having the content shown in FIG. 14 .
FIG. 19 is a view showing a display example of the screen for adding "Ohirabokujo" before "Shosenkyo" in the guidance course having the content shown in FIG. 14.
FIG. 20 is a view showing a display example of the screen on which "Ohirabokujo" has been added before "Shosenkyo" in the guidance course having the content shown in FIG. 14 .
FIG. 21 is a view showing a display example of the screen for changing "Nishizawakeikoku" into "Ohirabokujo" in the guidance course having the content shown in FIG. 14.
FIG. 22 is a view showing a display example of the screen on which "Nishizawakeikoku" has been changed into "Ohirabokujo" in the guidance course having the content shown in FIG. 14 .
FIG. 23 is a view showing a display example of the screen for changing "Shosenkyo" into "Ohirabokujo" in the guidance course having the content shown in FIG. 14 .
FIG. 24 is a view showing a display example of the screen on which "Shosenkyo" has been changed into "Ohirabokujo" in the guidance course having the content shown in FIG. 14, .
FIG. 25 is a view showing a display example of the screen for deleting "Nishizawakeikoku" in the guidance course having the content shown in FIG. 14, .
FIG. 26 is a view showing a display example of the screen on which "Nishizawakeikoku" has been deleted in the guidance course having the content shown in FIG. 14, .
FIG. 27 is a view showing a display example of the screen for deleting "Shosenkyo" in the guidance course having the content shown in FIG 14.
FIG. 28 is a view showing a display example of the screen on which "Shosenkyo" has been deleted in the guidance course having the content shown in FIG. 14, .
FIG. 29 is a view showing a display example of the screen for moving down "Nishizawakeikoku" by one in the guidance course having the content shown in FIG. 14, .
FIG. 30 is a view showing a display example of the screen on which "Nishizawakeikoku" has been moved down by one in the guidance course having the content shown in FIG. 14.
FIG. 31 is a view showing a display example of the screen for moving down "Shosenkyo" by one in the guidance course having the content shown in FIG. 14 .
FIG. 32 is a view showing a display example of the screen on which "Shosenkyo" has been moved down by one in the guidance course having the content shown in FIG. 14, .
FIG. 33 is a functional block diagram showing another configuration.
FIG. 34 is a view showing a display example of course contents.
FIG. 35 is a flowchart showing process procedures for preparing different guidance voices based on whether or not the course is used in setting the route .
FIG. 36 is a flowchart showing process procedures for deciding the point-routing .
FIG. 37 is a conceptual view showing the point routing decision using a routing start decision distance and a routing end decision distance.
FIG. 38A and 38B are views showing examples of guidance voices.
FIG. 39 is a functional block diagram showing another configuration.
FIG. 40 is a view showing a display example of search types .
FIG. 41 is a flowchart showing process procedures for selecting "keyword" as the search type to select the guidance course.
FIGS. 42A to 42D are conceptual view showing an example of the shift of the screen if the "keyword" is selected as the search type to select the guidance course .
FIG. 43 is a flowchart showing process procedures if the "this season course" is selected as the search type to select the guidance course.
FIGS. 44A to 44C are conceptual views showing an example of the shift of the screen if the "this season course" is selected as the search type to select the guidance course .
FIG. 45 is a flowchart showing process procedures if the "neighboring course" is selected as the search type to select the guidance course.
FIGS. 46A and 46B are conceptual views showing an example of the shift of the screen if the "neighboring course" is selected as the search type to select the guidance course .

### DETAILED DESCRIPTION OF THE PREFERRED EMBODIMENT

Next, the present invention (called "present embodiment or the present system" hereinafter) will be explained in detail with reference to the accompanying drawings hereinafter. The present embodiment can be implemented by controlling a computer having various hardware devices by using the softwares of the computer. In this case, the softwares are constructed by combining instructions together in compliance with the description of this specification, and approaches set forth in the prior art may be utilized in the common parts to the above prior art.

Also, the softwares contain not only program codes but also data prepared to execute the program codes. Also, operations and advantages of the present invention can be achieved by using actively physical processing devices such as the CPU, various circuits, etc. incorporated into the computer.

In this case, configurations of concrete hardwares and softwares to implement the present invention can be modified variously. For example, when a certain function is implemented by the physical electronic circuit such as LSI in answer to the circuit configuration and the processing capability of the CPU, such function can also be implemented by the softwares. Also, as the part using the software, various formats such as the compiler, the assembler, etc. may be considered as the format of the softwares. In addition, the recording medium for recording the softwares to implement the present invention is one embodiment of the present invention as a single body.

As described above, since particular modes to implement the present invention by using the computer may be thought of variously, the present invention and the embodiment will be explained by using virtual circuit blocks, which accomplish individual functions contained in the present invention and the embodiment, in the following.

### [1. Example, not being part of the present invention but provided for explanatory purposes]

In the navigation technology, i.e., the navigation system and method installed on the car as the mobile body to guide the route and the recording medium for recording navigation softwares, a first example shows an example which is capable of setting the desired guidance course arbitrarily by causing the user to select either the destination is used as it is or the destination is newly set again if the destination has already been set in setting the guidance course.

### [1-1. Configuration of the first example]

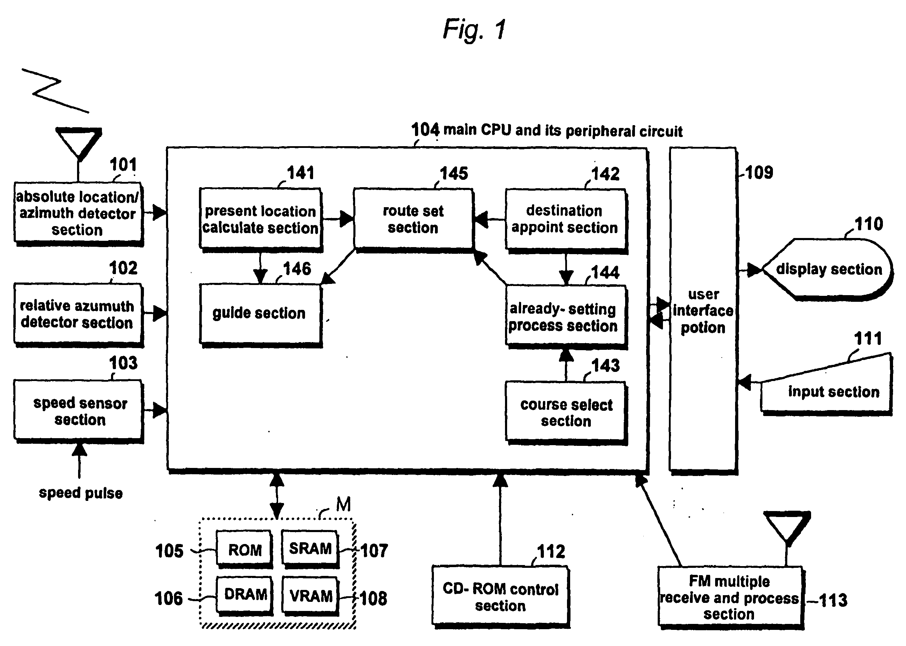

First, FIG. 1 is a functional block diagram showing the configuration of the example.

### [1-1-1. Overall configuration]

That is, the example comprises an absolute location/azimuth detector section 101, a relative azimuth detector section 102, a speed sensor section 103, a main CPU and its peripheral circuit 104, a memory group M, a user interface potion 109, a display section 110, an input section 111, a CD-ROM control section 112, and an FM multiple receive and process section 113.

In order to calculate the absolute location coordinate and the azimuth of the present location of the car (called "own car" hereinafter) on which the present system is mounted, i.e., own car location on the surface of the earth, the absolute location/azimuth detector section 101 receives the GPS radio wave transmitted from the GPS artificial satellite, for example, via the antenna and the receiver. Also, the relative azimuth detector section 102 detects the relative azimuth of own car by using the gyro, etc. Also, the speed sensor section 103 processes the speed pulse derived from the car to calculate the speed of own car.

Also, the main CPU and its peripheral circuit 104 executes a role of a control circuit for controlling the overall present system. The memory group M consists of various memories necessary for the operation of the present system. Out of these memories, for example, the ROM 105 stores previously BIOS, boot-up program, etc., and is accessed by the main CPU and its peripheral circuit 104 in starting the present system, etc. Also, the dynamic RAM (DRAM) 106 is used as the work area, etc., and the computer program to implement respective functions of the present system is loaded thereon.

Also, the static RAM (SRAM) 107 is a nonvolatile memory. That is, since the SRAM 107 is backed up by the battery during when the main power supply of the present system such as the accessory power supply of the car is turned OFF, such SRAM 107 still holds the memory contents to prepare for the situation the power supply is turned ON. The Video RAM (VRAM) 108 is a memory employed for video display on the display section 110.

The display section 110 outputs various information such as the map, the operation menu, etc. by using the liquid crystal display panel, the voice synthesizer (both not shown), etc. The user inputs various information such as the instruction, the destination, and the like into the present system via the input section 111 by using operation key switches, etc. Also, the user interface potion 109 is an interface which connects the display section 110 and the input section 111 to the main CPU and its peripheral circuit 104 by using the I/O control circuit, the driver, etc.

Also, the CD-ROM control section 112 is a section for storing searched map data for representing respective roads and their locations, etc. Concretely the CD-ROM control section 112 is constructed to read the navigation system softwares, various information such as the map data, etc. from the CD-ROM. In this case, these information recorded on the CD-ROM are called the database in total.

Also, the FM multiple receive and process section 113 receives the FM broadcasting wave. In addition, this FM multiple receive and process section 113 may be constructed to execute the process which picks up the traffic information of VICS from the received radio wave.

### [1-1-2. Roles of the main CPU and its peripheral circuit]

Then, the main CPU and its peripheral circuit 104 is constructed to perform roles of the present location calculate section 141, the destination appoint section 142, the course select section 143, the already-setting process section 144, the route set section 145, and the guide section 146, by actions of the above softwares.

The present location calculate section 141 is a section for calculating the present location of own car, i. e., own car location. Concretely the present location calculate section 141 is constructed to calculate own car location by combining the GPS navigation and the self-contained navigation together. Here the GPS navigation calculates the present location by using the information obtained from the absolute location/azimuth detector section 101, based on the radio wave transmitted from the artificial satellite. Also, the self-contained navigation calculates the present location by using the information obtained from the relative azimuth detector section 102 and the speed sensor section 103, based on the earth magnetism and the speed of own car.

Also, the destination set section 142 is a section for setting the destination of the route guidance by the present system. For example, the destination may be pointed on the map displayed on the screen of the display section 110 by a cursor, or appointed based on searched results after the destinations are searched from the map data based on conditions such as a gasoline service station, a convenience store, a family restaurant, etc. near own car location.

Also, the course select section 143 is a section for selecting the desired guidance course from a plurality of guidance courses that trace a plurality of previously decided spots. The guidance courses are information that correlates several spots such as tourist spots in a certain area, and are prepared previously in the database in the CD-ROM that is accessed by the CD-ROM control section 112. Also, the guidance courses are named to attract user's interest or to express the feature of the guidance course, for example, "Waterfront Twilight Cruising Course", respectively. Also, the guidance courses that are decided personally by the user may be additionally registered later.

Also, the already-setting process section 144 is a section for asking the user to check whether or not the already-set destination should be used as it is if the destination has already been set when the above guidance course is selected, and for selecting the menu. Also, the route set section 145 is a section for calculating and setting the optimum route that reaches the given destination via the spots in the selected guidance course, based on the map data read out by the CD-ROM control section 112.

Also, the route set section 145 is constructed to set the last spot in the selected guidance course as the destination if the already-set destination is not used. Also, the guide section 146 is a section for guiding the route by using the route set by the route set section 145 and the contents of the database read out by the CD-ROM control section 112.

### [1-2. Operation of the first example]

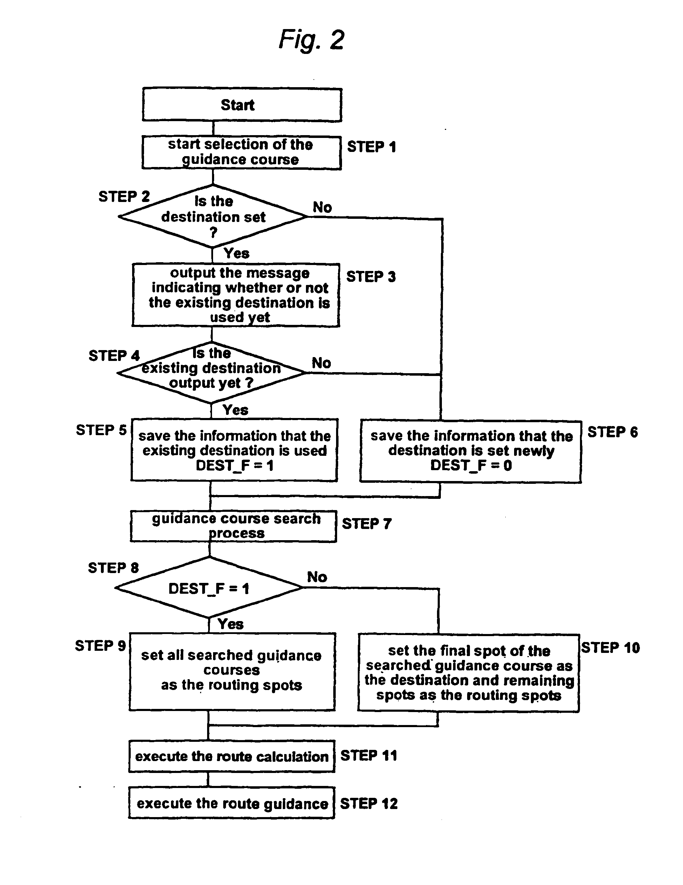

The first example constructed as above operates described in the following. FIG. 2 is a flowchart showing process procedures in the first example. First, the user starts the process for selecting the guidance course by the input section 111 and the course select section 143 (STEP1). Such guidance course may be reached from a plurality of guidance courses registered previously in the database based on the area, the name, or the like.

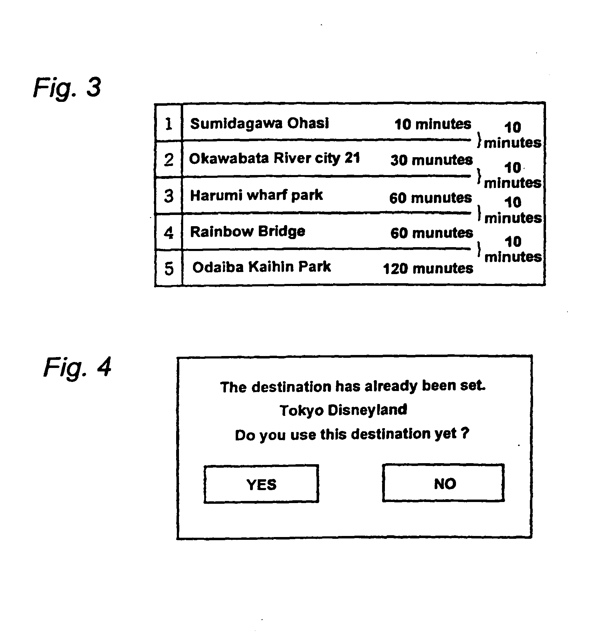

Then, an example of the guidance course as the searched object in the first example is shown in FIG. 3. That is, as shown in FIG. 3, various information are attached to the guidance courses stored in the database. For example, in this example, criterions of the consumed time to visit the spots, i.e., the facilities are estimated as 10 minutes, 30 minutes, 60 minutes, 60 minutes, and 120 minutes respectively, and criterions of the moving time between the spots are estimated as 10 minutes, 10 minutes, 10 minutes, and 10 minutes respectively. There is no necessity that the number of the spots contained in the guidance course should always be set to five, and thus it may set larger or smaller than five.

Then, at the point of time when the above selection of the guidance course is carried out, both the case where the destination of the route is not previously set by the destination set section 142 and the case where the destination has already be set may be considered. The operation of the present system is different in either case as follows.

### [1-2-1. Procedures according to the presence of the destination]

First, when the process for selecting the guidance course is started by the input section 111 (STEP1), the information indicating that the destination is set newly is saved (STEP6) without displaying the message on the screen shown in STEP3 if the destination has not been set yet (STEP2). Then, the flow goes to the process selecting the guidance course by the search (STEP7) .

Then, after the guidance course has been selected by the search, etc., the route set section 145 sets automatically the end point as the final spot in the selected guidance course as the destination and remaining spots as the routing spots (STEP10) if the already-set destination is not used as above (STEP8) . That is, the route set section 145 calculates and sets the optimum route that comes up to the destination via these routing spots, based on the map data read out by the CD-ROM control section 112 (STEP11).

Also, the already-setting process section 144 does not immediately goes to the process for setting the guidance course by the search if the destination has already been set when the guidance course is selected as above (STEP2). In other words, in this case, as shown in FIG. 4, the already-setting process section 144 outputs to the display section 110 the message asking the user to check whether or not the existing already-set destination should be used as it is (STEP3).

At this time, the user selects by the operation of the already-setting process section 144 whether or not the existing destination is output as it is (STEP4). That is, the user may select "YES" from the input section 111 if he or she intends to set the guidance course as the routing spot in the condition that the already-set destination is still left. In this case, after the information to the effect that the existing destination is used is saved (STEP5) and the guidance course is set by the search (STEP7), the existing destination is left as it is. That is, the route set section 145 sets all searched guidance courses as the routing spots (STEP8, STEP9) and calculates and sets the route (STEP11).

In contrast, if the user intends to set the end point of the selected guidance course as the new destination by canceling the existing destination, he or she may select "YES" from the messages shown in FIG. 4 by the input section 111. In this case, the information that the destination is set newly is saved (STEP6) . After this, the similar process to the case where the destination has not been set in STEP2 is carried out (STEP10).

Then, the guide section 146 executes the route guidance by using the route that is set as above by the route set section 145 and the contents of the database read out by the CD-ROM control section 112 (STEP12). At this time, the present location calculate section 141 calculates in sequence the present location of own car, i.e., the own car location by combining the GPS navigation and the self- contained navigation together.

### [1-2-2. Examples of the guidance course selection and the route setting]

Then, and example of the selection of the above guidance course and the route setting based on the selection is shown. First, if the destination is not set previously, the example to select the guidance course as shown in FIG. 3 will be explained in particular. In this case, for example, if the user pushes the button for shifting to the process to select the guidance course, for example, "guidance course" by the input section 111 such as the remote controller, process goes to the screen to search the guidance course (STEP7) since the destination has not been set (STEP2) .

In this case, if the guidance course shown in FIG. 3 is selected, the end point of the guidance course becomes the destination since the destination has not been set yet. In the case.of the example in FIG. 3, the route is calculated and set such that "Odaiba Kaihin Park" is set as the destination and remaining four spots "Sumidagawa Ohasi" to "Rainbow Bridge" are set ad the routing spots.

Then, if the destination like "Tokyo Disneyland" has been set previously, the case where the guidance course shown in FIG. 3 is selected will be explained in detail. In this case, if the user pushes the button for shifting to the process to select the guidance course, for example, "guidance course" by the input section 111 such as the remote controller, the screen to request the user to select is displayed as shown in FIG. 4 since the destination has already been set.

If "NO" is selected here, the similar process to the case where the destination has not been set is carried out. In contrast, if "YES" is selected, the information indicating that the destination is used as it is is stored in the memory such as DRAM (STEPS) and then the screen goes to the screen to search the guidance course (STEP7). In this case, if the guidance course as shown in FIG. 3 is selected by searching the guidance courses, the destination is still left as "Tokyo Disneyland" since the information on the memory is set to remain the destination (STEP8) . The route which contains five spots of "Sumidagawa Ohasi" to "Odaiba Kaihin Park" in the selected guidance course is calculated and set by the route set section 145 (STEP10, STEP11).

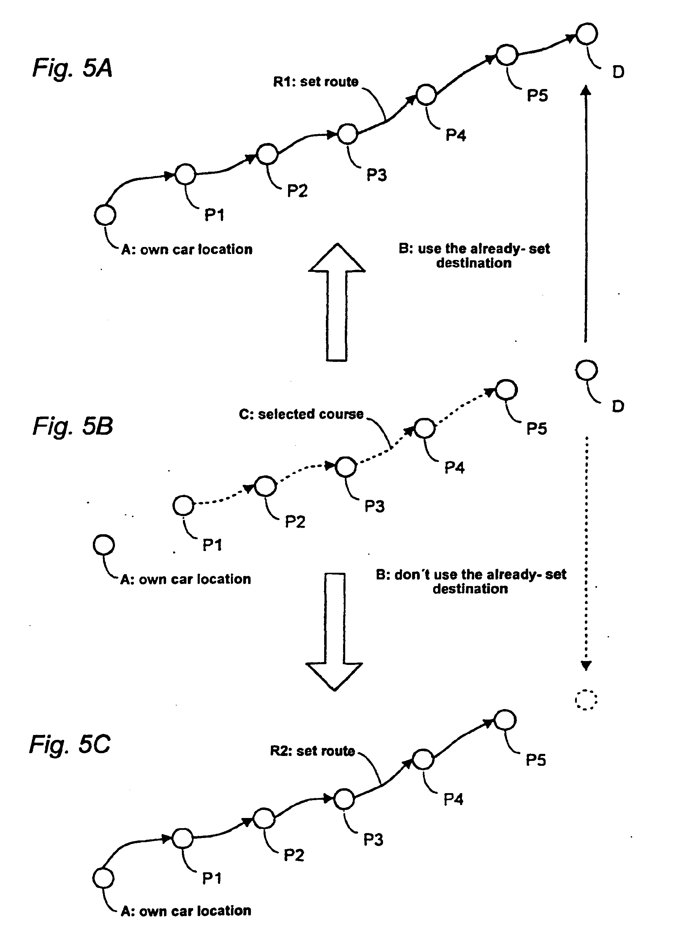

Then, an example in which different routes are calculated and set based on whether or not the already-set destination should be used as above is shown conceptually in FIG. 5. That is, as shown in FIG. 5B, the case where the course C consisting of spots P1→P2→P3→P4→P5 is selected at the own car location A will be considered.

In this case, if the already-set destination is used as it is, as shown in FIG. 5A, the route R1 such as
A→P1→P2→P3→P4→P5→D
which reaches the already-set destination D from the own car location A is calculated and set.

In contrast, if the destination has not been set, or if the already-set destination D is not used, as shown in FIG. 5C, the route R2 such as
A→P1→P2→P3→P4→P5
in which the last spot P5 in the selected guidance course C is set as the destination and which reaches the spot P5 from th own car location A, is calculated and set.

### [1-3. Advantages of the first example]

As described above, in the first example, since the user can select whether or not the already-set destination should be left when the route is set newly based on the selected guidance course, it is make easy to set freely the desired route and guide the car and thus the convenience of operating the system can be improved. Especially, in the first example, if the destination is not set yet or if the already-set destination is not used, the operation can be simplified since the end point of the guidance course is set as the destination without newly appointing the destination separately.

### [2. Embodiment]

Then, in the navigation technology, i.e., the navigation system and method installed on the car as the mobile body to guide the route and the recording medium for recording navigation softwares, an embodiment can provide always the effective guidance course to the user by reconstructing automatically the routing order of the routing spots in the guidance course based on the positional relationship between the present location of own car and the spots.

### [2-1. Configuration of the embodiment]

More particularly, the main CPU and its peripheral circuit 104 is constructed to perform roles of the compare section 147, the invert section 148, and the check section 149, by actions of the above softwares. The compare section 147 is a section for comparing the start point and the end point to decide whether or not the present location is close to the start point or the end point of the guidance course if the guidance course is selected. Also, the invert section 148 is a section for inverting the routing order of the spots contained in the guidance course if the present location is close to the end point of the guidance course. Also, the check section 149 is a section for asking the user to select whether or not the routing order should be inverted if the present location is close to the end point of the guidance course.

The compare section 147 and the invert section 148 constitute a section for changing the routing order of the spots contained in the guidance course based on the positional relationship between the present location and the spots if the guidance course is selected.

### [2-2. Operation of the embodiment]

The embodiment constructed as above operates as follows.

### [2-2-1. Outline of the operation]

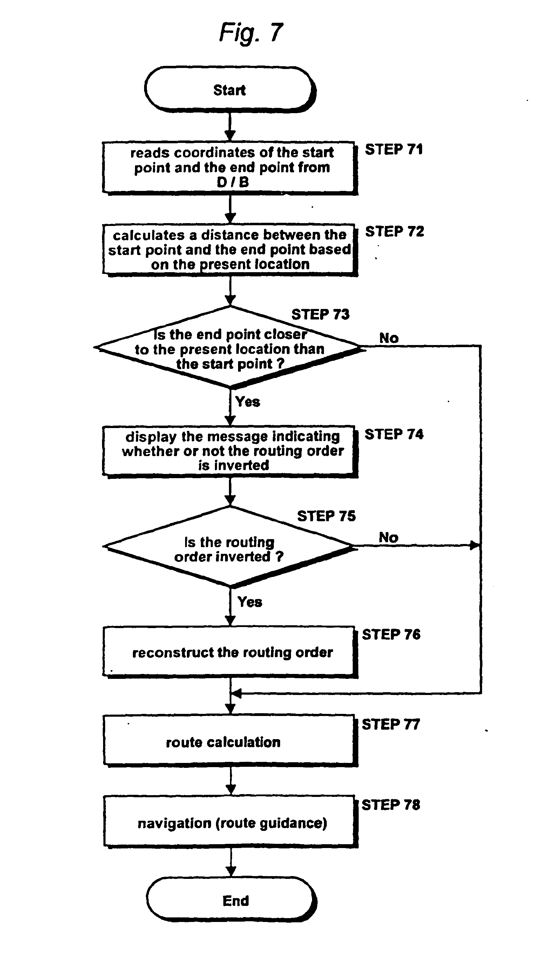

First, FIG. 7 is a flowchart showing process procedures of the routing order of the selected guidance course in the embodiment. That is, in these procedures, if the guidance course is selected by the course select section 143, the compare section 147 compares whether or not the present location is close to the start point or the end point of the guidance course (STEPS71 to 73) .

More particularly, the compare section 147 reads coordinates of the start point and the end point of the spots, i.e., the routing spots contained in the guidance course by providing the instruction to the CD-ROM control section 112 (STEP71). Also, the compare section 147 calculates distances between the present location and the start point and the end point respectively by receiving the present location of own car from the present location calculate section 141 (STEP72).

As a result, if the present location is closer to the end point than the start point of the guidance course (STEP73), the check section 149 asks the user by displaying the message indicating whether or not the routing order should be inverted (STEP74, STEP75). At this time, if the effect that the routing order should be inverted (STEP75), the invert section 148 reconstructs the routing order by inverting it (STEP76), the route set section 145 calculates and sets the route (STEP77). Then, the guide section 146 guides the route in compliance with the route set as above (STEP78) .

### [2-2-2. particular example]

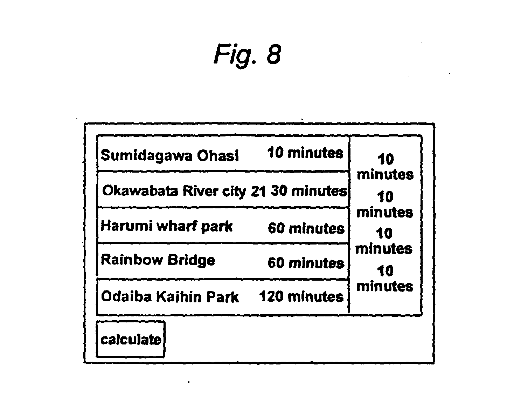

Then, a particular example of the above process is given. For example, in order to select the guidance course which is most suitable for the user, the user selects the name of the favorite guidance course via the predetermined screen scroll from the screen, on which the names of the guidance courses are listed, such as the hierarchical menu selection, etc. As a result, as shown in FIG. 8, the display is shifted to the screen for displaying the concrete contents of the guidance course.

The user checks the contents of the guidance course on the screen and then the user enters into the route calculation in the next step by clicking "calculate" button dis played on the screen by using a pointer or a cursor, for example, if he or she is agreeable to the display contents.

Here, for respective guidance courses recorded on the database, the information of the order of the routing spots, i.e., the routing order are prepared as initial values. Then, prior to the route calculation, the compare section 147 fetches coordinates of the start point, i.e., the first spot of the route order and the end point, i.e., the last spot of the route order from the database (STEP71) and then calculates the distances from the present location respectively (STEP72).

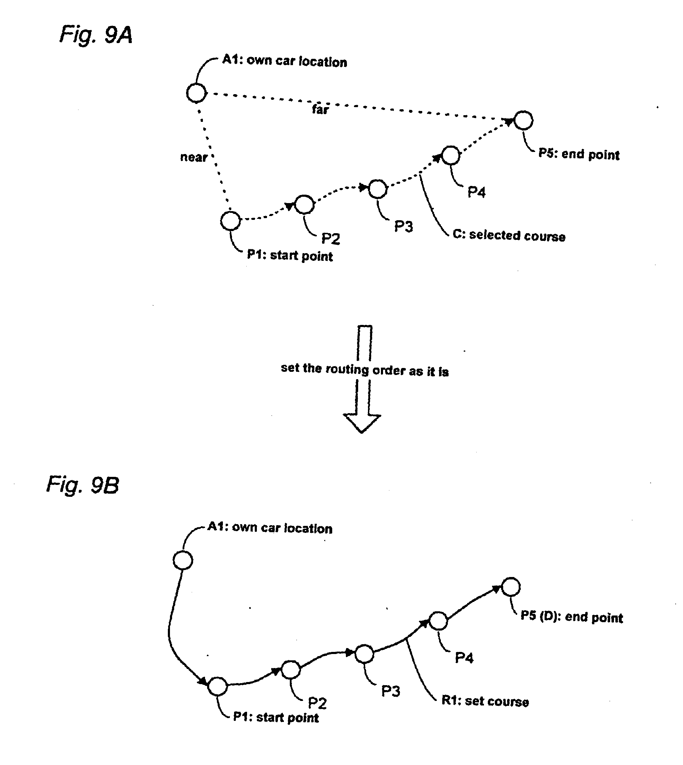

For example, in the example in FIG. 9A, if the guidance course C reaching the end point P5 from the start point P1 is selected, the distance between the own car location A1 and the start point P1 is shorter than that between the own car location A1 and the end point P5. In such case, the route of the selected guidance course is calculated in the order like own car location A1→P1, or P1→P2, in compliance with the routing order recorded on the database (STEP77), and the result is displayed to start the route guidance (navigation) (STEP78). FIG. 9B shows an example of the set course R1 which is calculated in accordance with the routing order in FIG. 9A by a solid line arrow.

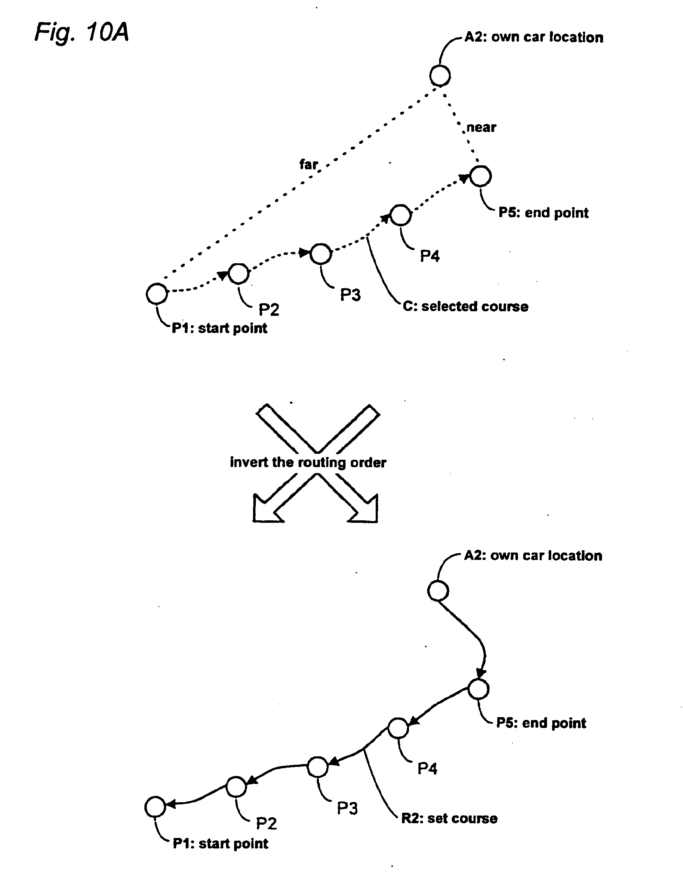

In contrast, for example, in the example in FIG. 10A, the guidance course C reaching the end point P5 from the start point P1 like the above is selected, but the distance between the own car location A2 and the start point P1 is longer than that between the own car location A2 and the end point P5. In such case, the message to the effect that the present location is closer to the end point than the start point is output (STEP74), and at the same time it is decided by the user whether or not the routing order is changed (STEP75).

At this time, if the answer of "not changed" is issued, the route is calculated sequentially in the routing order of the spots recorded on the database (STEP77), and then the result is displayed to start the navigation (STEP78).

In contrast, if the answer of "changed" is issued, as shown in FIG. 10B, the routing order of the spots is inverted to exchange the start spot and the end spot, and then the route is calculated in the order like own car location A2→P5, or P5→P4 while setting the end point P1 as the destination (STEP77), and then the result is displayed to start the navigation (STEP78).

FIG. 10B shows an example of the route calculated by inverting the routing order in FIG. 10A is shown by a solid line arrow. In this case, the order of A→B→C→D→E is changed to the order of E→D→C→B→A.

### [2-3. Advantages of the embodiment]

As described above, in the embodiment, since the route is calculated by changing the routing order of the spots in the guidance course based on the positional relationship against the present location, it is possible to travel on the guidance course effectively irrespective of the present location. In particular, in the embodiment, the routing order of the spots in the guidance course is reconstructed by inverting it based on the present location, it is possible to travel on the guidance course effectively irrespective of the present location.

Also, in the embodiment, even if the present location is close to the end point in the guidance course, it can be selected freely whether or not the routing order should be inverted. Therefore, it is possible to set the route much more finely according to the circumstances of the user and the feeling, and thus the availability of the navigation can be improved.

### [3. Other example]

. For example, the present invention may be applied to not only the car but also other type mobile body such as the motor bicycle. Also, modes for changing the routine order of the spots in the guidance course are not limited to the inversion shown in the above embodiment. For example, distances between the present location and the spots contained in the guidance course are mutually compared respectively and then the route may be set to reach the last spot via the nearest spot.

Also, in the above embodiment, the already- setting process section 144 is not indispensable. In addition, the invention shown in the above embodiment can be implemented at the same time in the same navigation system, etc.

Also, details such as the content of the message asking the user to decide whether or not the already-set destination should be used as it is or whether or not the routing order should be inverted if the present location is near the end point may be defined arbitrarily.

As described above, there can be provided the navigation technology, i.e., the navigation system and method which are capable of setting the desired guidance course arbitrarily by causing the user to select either the destination is used as it is or the destination is newly set again if the destination has already been set in setting the guidance course, and the recording medium for recording the navigation softwares. Therefore, the convenience of operating the navigation can be improved.

Next, a plurality of examples not being part of the present invention (called "present examples" hereinafter) will be explained in detail with reference to the accompanying drawings hereinafter which may help to understand better the present invention. The present examples can be implemented by controlling a computer having various hardware devices by using the softwares of the computer. In this case, the softwares are constructed by combining instructions together in compliance with the description of this specification, and approaches set forth in the prior art may be utilized in the common parts to the above prior art.

Also, the softwares contain not only program codes but also data prepared to execute the program codes. Also, operations and advantages of the present invention can be achieved by using actively physical processing devices such as the CPU, various circuits, etc. incorporated into the computer.

In this case, configurations of concrete hardwares and softwares to implement the present invention can be modified variously. For example, when a certain function is implemented by the physical electronic circuit such as LSI in answer to the circuit configuration and the processing capability of the CPU, such function can also be implemented by the softwares. Also, the execute module, the intermediate code, the higher level language, etc. may be considered as the format of the softwares. In addition, the computer-readable recording medium for recording the softwares to implement the present invention is one embodiment of the present invention as a single body.

### [1. Configuration]

First, the present example shows the navigation system (called a "present system" hereinafter) installed on the car as the mobile body to guide the route and the navigation method executed on this navigation system, and can be grasped as the recording medium for recording the navigation softwares to implement them.

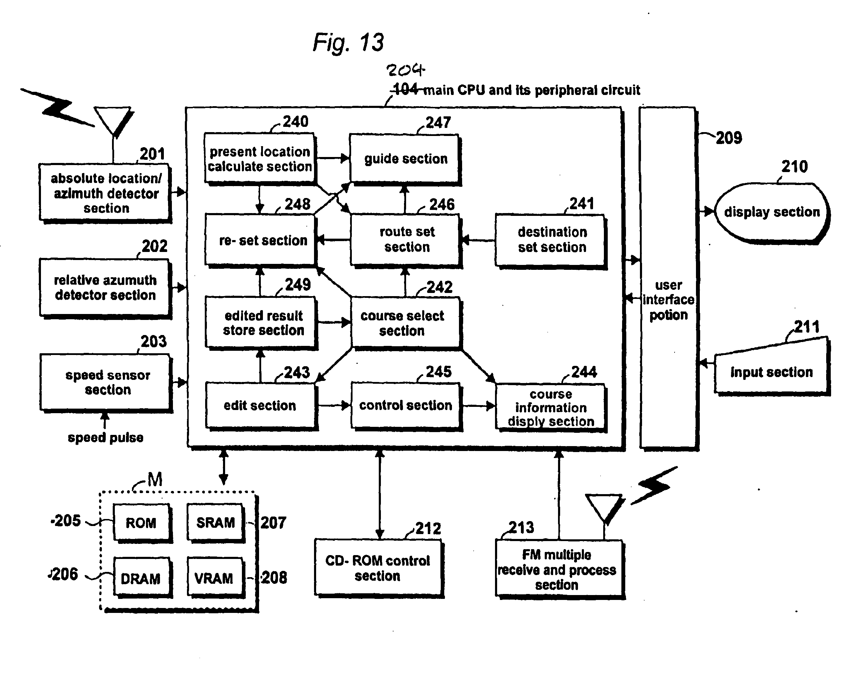

In particular, the present example is an example in which the editing of the guidance course such as add, delete, change, exchange, etc. of the spots can be accomplished in the above navigation technology. FIG. 13 is a functional block diagram showing the configuration of the present example.

### [1-1. Overall configuration]

That is, the present example comprises an absolute location/azimuth detector section 201, a relative azimuth detector section 202, a speed sensor section 203, a main CPU and its peripheral circuit 204, a memory group M, a user interface potion 209, a display section 210, an input section 211, a CD-ROM control section 212, and an FM multiple receive and process section 213.

In order to calculate the absolute location coordinate and the azimuth of the present location of the car (called "own car") on which the present system is mounted, i.e., own car location on the surface of the earth, the absolute location/azimuth detector section 201 receives the GPS radio wave transmitted from the GPS artificial satellite, for example, via the antenna and the receiver. Also, the relative azimuth detector section 202 detects the relative azimuth of own car by using the gyro, etc. Also, the speed sensor section 203 processes the speed pulse derived from the car to calculate the speed of own car.

Also, the main CPU and its peripheral circuit 204 performs a role of a control circuit for controlling the overall present system. The memory group M consists of various memories necessary for the operation of the present system. Out of these memories, for example, the ROM 205 stores previously BIOS, boot-up program, etc., and is accessed by the main CPU and its peripheral circuit 204 in starting the present system, etc. Also, the dynamic RAM (DRAM) 206 is used as the work area, etc., and the computer program to implement respective functions of the present system is loaded thereon.

Also, the static RAM (SRAM) 207 is a nonvolatile memory. That is, since the SRAM 207 is backed up by the battery during when the main power supply of the present system such as the accessory power supply of the car is turned OFF, such SRAM 207 still holds the memory contents to prepare for the situation the power supply is turned ON. The Video RAM (VRAM) 208 is a memory employed for video display on the display section 210.

The display section 210 outputs various information such as the map, the operation menu, etc. by using the liquid crystal display panel, the voice synthesizer (both not shown), etc. The user inputs various information such as the instruction, the destination, and the like into the present system via the input section 211 by using operation keys provided to the remote control unit, etc. Also, the user interface potion 209 connects the display section 210 and the input section 211 to the main CPU and its peripheral circuit 204 by using the I/O control circuit, the driver, etc.

Also, the CD-ROM control section 212 is a section for storing searched map data for representing respective roads and their locations, and map data containing display data, etc. Concretely the CD-ROM control section 212 is constructed to read navigation system softwares, various information such as the above map data, etc. from the CD-ROM. In this case, these information recorded on the CD-ROM are called the database in total.

Also, the CD-ROM.control section 212 has a role as a storing section for storing more than one guidance course that traces a plurality of previously decided spots. In other words, the guidance course is information that correlates several spots such as tourist spots in a certain area, and more than one guidance course is prepared in advance in the database in the above CD-ROM.

Also, the guidance courses are named to attract user's interest or to express the feature of the course, for example, "Waterfront Twilight Cruising Course", respectively. The guidance courses that are decided personally by the user may be additionally registered later.

Also, the FM multiple receive and process section 213 receives the FM broadcasting wave. In addition, this FM multiple receive and process section 213 may be constructed to execute the process which picks up the traffic information of VICS from the received radio wave.

### [1-2. Roles of the main CPU and its peripheral circuit]

Then, the main CPU and its peripheral circuit 204 is constructed to perform roles of the present location calculate section 240, the destination set section 241, the course select section 242, the edit section 243, the course information display section 244, the control section 245, the route set section 246, the guide section 247, the re-set section 248, and the edited result store section 249, by actions of the above softwares.

The present location calculate section 240 is a section for calculating the present location of own car, i.e., own car location. Concretely the present location calculate section 240 is constructed to calculate own car location by combining the GPS navigation and the self-contained navigation together. Here the GPS navigation calculates the present location by using the information obtained from the absolute location/azimuth detector section 201, based on the radio wave transmitted from the artificial satellite. Also, the self-contained navigation calculates the present location by using the information obtained from the relative azimuth detector section 202 and the speed sensor section 203, based on the earth magnetism and the speed of own car.

Also, the destination set section 241 is a section for setting the destination of the route guidance by the present system. For example, the destination may be pointed on the map displayed on the screen of the display section 210 by a cursor, or appointed based on searched results after the destinations are searched from the map data based on conditions such as a gasoline service station, a convenience store, a family restaurant, etc. near own car location.

Also, the course select section 242 is a section for selecting the desired guidance course from a plurality of guidance courses stored in the above database that is accessed by the CD-ROM control section 212.

Also, the edit section 243 is an editing section for editing the spots contained in the selected guidance course. This edit section 243 is constructed to perform at least add, delete, change, and exchange of the routing order of the spots in the guidance course.

Here, the database accessed by the CD-ROM control section 212 is constructed to store the course information containing at least the necessary time of the spots, the traveling time between the spots in the guidance courses. The course information display section 244 is a display section for displaying such course information on the display section 210.

Also, the control section 245 is a controlling section for controlling the course information display section 244 not to display a part of the course information in response to the editing content by the edit section 243.

Also, the route set section 246 is a section for setting the guided route based on the selected guidance course. In particular, this route set section 246 is a section for calculating and setting the optimum route that reaches the given destination via respective spots in the selected guidance course, based on the map data read out by the CD-ROM control section 212. Also, the guide section 247 is a section for guiding the route by using the route set by the route set section 246 and the contents of the database read by the CD-ROM control section 212.

Also, the re-set section 248 is a section for re-setting the route based on the edited guidance course if the selected guidance course is edited. Also, the edited result store section 249 is a second storing section for storing information indicating the edited result if the guidance course is edited.

### [2. Operation]

The present example constructed as above operates as described in the following.

### [2-1. Selection of the guidance course]

That is, first, the user selects the guidance course by using the input section 211 and the course select section 242. Also, the destination may be contained previously in the guidance course or may be appointed separately by the destination set section 241.

The guidance course can be selected by searching the desired one from the plural guidance courses registered previously in the database based on the area, the name, etc. Also, the destination may be selected by pointing it on the map displayed on the screen by virtue of a pointer, a cursor, or the like, or searching it based on the area or the name, types of landmarks such as the gasoline service station, the convenience store, the family restaurant, etc.

### [2-2. Display of the course information]

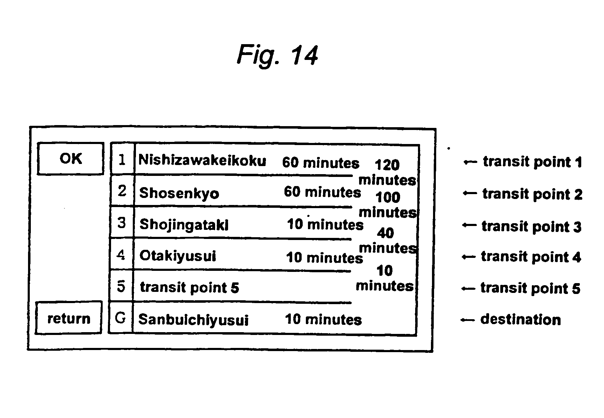

Then, if the course is selected as above, the course information display section 244 displays the course information representing the contents of the selected guidance course on the display section 210. Now, an example in which the course information and the destination are displayed on the display screen of the display section 210 is shown in FIG. 14. That is, in this example, transit points 1 to 4 from "Nishizawakeikoku" to "Otakiyusui" and "Sanbuichiyusui" as the destination are displayed.

Also, as shown in FIG. 14, the course information stored in the database every guidance course contain the necessary time per spot and the traveling times between the spots. Here, the necessary times are criterions of the times for visiting respective spots and consumed there, and are assumed as the sightseeing times to be recommended (called 'recommended sightseeing times" hereinafter). And, the traveling times are assumed as the normally expected moving necessary times between the spots (estimated moving times).

For example, in the guidance course shown in FIG. 14, the recommended sightseeing times of "Nishizawakeikoku" and "Shosenkyo" are 60 minutes respectively, and the recommended sightseeing times of other guidance spots are 10 minutes respectively. In addition, the times displayed between the guidance spots are the estimated moving times between the guidance spots. For example, the estimated moving time from the transit point 1 "Nishizawakeikoku" to the transit point 2 "Shosenkyo" is 120 minutes.

Also, this display screen is used commonly as the editing screen for editing the guidance course by the edit section 243. In this example, this display screen can edit up to six guidance spots that are obtained by adding five transit points 1 to 5 and the destination G. The transit point which has not been set particularly, i.e., blank transit point is displayed by a temporal name such as 'transit point 5".

In this case, if the destination is not set, the system may be set such that the editing operation itself cannot be carried out. Also, there is no necessity that the number of spots contained in the guidance course should be always set to five, and thus the number of spots may be set larger or smaller than five.

### [2-3. Decision and Route setting]

If the user executes a predetermined operation such as "Decision", for example, by checking the course information displayed as above, the route set section 246 calculates and sets the optimum route that gets to the destination via the transit points in the guidance course based on the map data read out by the CD-ROM control section 212.

Then, the guide section 247 performs the guidance, i.e., route guidance by using the route set by the route set section 246 as above and the contents of the database such as the map data read out by the CD-ROM control section 212. At this time, the present location calculate section 240 calculates sequentially the present location of own car, i.e., own car location by combining the GPS navigation and the self-contained navigation together.

### [2-4. Edition of the guidance course)

In addition, in the present example, before or after the route setting described as above, the user can carry out the editing operation such as add, delete, change, exchange, etc. of respective spots in the selected guidance course by the operation of the edit section 243.

### [2-5. Editing procedures]

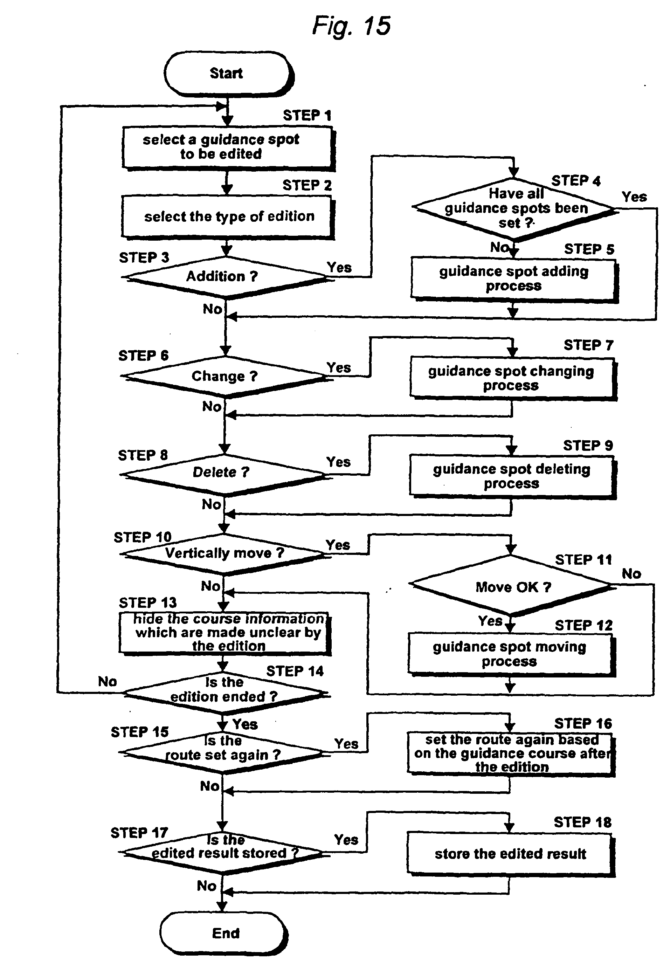

FIG. 15 is a flowchart showing process procedures for editing the guidance course. That is, in these procedures, first the user selects the guidance spots to be edited in the guidance course by using operation keys of the remote controller, a cursor, a pointer, etc., for example, by the operations of the input section 211 and the edit section 243 (STEP1).

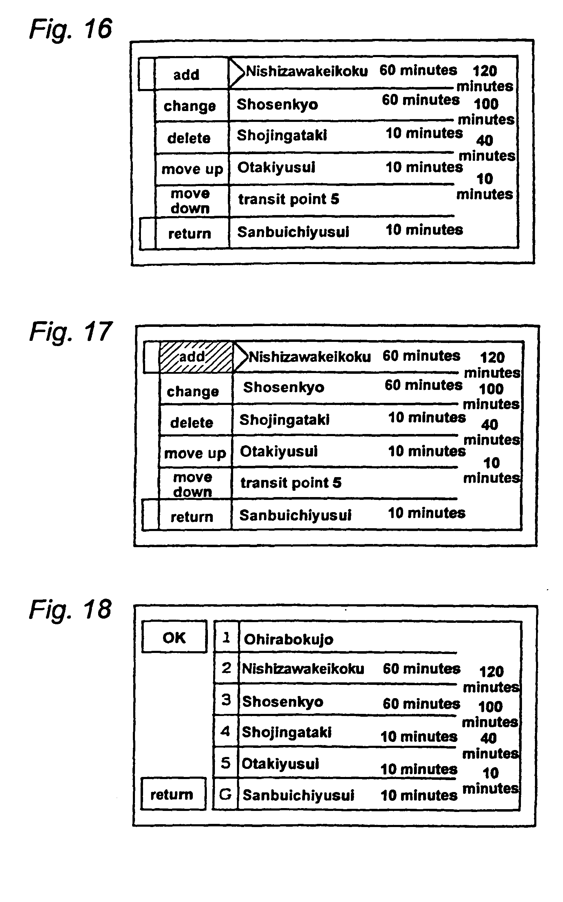

For example, FIG. 16 is an example showing the situation that the transit point 1 "Nishizawakeikoku" of the guidance courses shown in FIG. 14 is selected, wherein a triangular cursor points at the transit point 1 "Nishizawakeikoku" . If the guidance spot to be edited in this manner is selected, the type of edition such as "add", "change", etc. is displayed to be typed over on the editing screen, as shown in FIG. 16.

Out of the types of edition displayed here, "add" sets a new guidance spot immediately before the selected guidance spot. However, it is impossible to execute "add" after six guidance spots containing the destination have already been set. Also, "change" sets another guidance spot in place of the selected guidance spot. Also, "delete" deletes the selected guidance spot. However, assume that it is impossible to delete the destination.

Also, "move up" exchanges the selected guidance spot with the guidance spot that is positioned immediately on it. However, it is impossible to execute "move up" if the selected guidance spot is the transit point 1. Also, the selected guidance spot is exchanged with the transit point 5 if such selected guidance spot is the destination.

Also, "move down" exchanges the selected guidance spot with the guidance spot that is positioned immediately under it. However, it is impossible to execute "move down" if the selected guidance spot is the destination. Also, the selected guidance spot is exchanged with the destination if such selected guidance spot is the transit point 5.

The user selects the type of edition among these types of the edition (STEP2). For example, FIG. 17 is a view showing the situation that "add is selected as the type of edition for the transit point 1 "Nishizawakeikoku" selected in FIG. 16. In this example, the selected type "add" of edition is inversely displayed.

Under the condition that the type of edition is selected in this manner, the edition of the selected guidance spot can be performed in answer to the type of selected edition by executing a predetermined operation such as leaving a finger from the operation key (STEP3 to STEP12). That is, according to the selected type of edition, when "add" is selected (STEP3), the process for adding the guidance spot is carried out (STEP5) unless all guidance spots have been set (STEP4).

Similarly, when "change" is selected (STEP6), the process for changing the guidance spot is carried out (STEP7) . Also, when "delete" is selected (STEP8), the process for deleting the guidance spot is carried out (STEP9). Also, when "move vertically", i.e., "move up" or "move down" is selected (STEP10), the moving process for exchanging the sequence of the guidance spots (STEP12) if the movement of the selected type is available (STEP11).

Also, the control section 245 controls the course information display section 244 not to display a part of the course information in response to the content of the edition by the edit section 243. As a result, the item of the course information which are made unclear in the nature of the edition is hidden (STEP13) .

In more detail, if the spot is added in the middle of the course by the edition, the control section 245 controls the course information display section 244 not to display the estimated moving times between the spots which are positioned before and after the added spot. Also, if the spot in the course is deleted or changed by the edition, the control section 245 controls the course information display section 244 not to display the recommended sightseeing time of the spot and the estimated moving times between the spots before and after the spot. Also, if the sequence of the spots in the course is exchanged by the edition, the control section 245 controls the course information display section 244 before and after the exchange not to display these spots and the estimated moving times between the spots which are positioned before and after the spots.

### [2-6. Examples of edition]

Next, particular examples of the edition described above will be explained.

### [2-6-1. Example of add]

At first, an example of "add" is shown. For example, FIG. 18 shows the result that "Ohirabokujo" has been added before the transit point 1 "Nishizawakeikoku". In contrast to the situation in FIG. 17, the newly added "Ohirabokujo" becomes the transit point 1 and also the transit points from "Nishizawakeikoku" to "Otakiyusui" are shifted one by one respectively. In this case, like the destination, the newly added item may be appointed by pointing it on the map, searching it, or the like.

Also, since the edited contents in this case have no effect on the course information of the guidance course which have already been set, respective items of the course information, i.e., the recommended sightseeing times and the estimated moving times are displayed for the corresponding transit points, as they are, after the edition in FIG. 18 although their display positions are shifted downward, like FIG. 14 and FIG. 16.

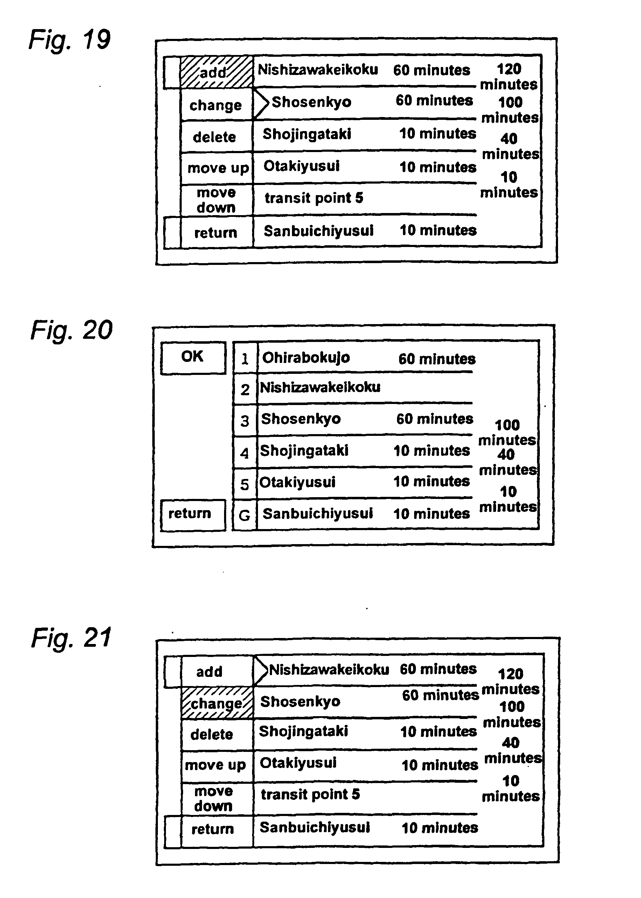

Also, if "Ohirabokujo" is added by selecting "add" of the transit point 2 "Shosenkyo" (FIG. 19) in the guidance course having the content shown in FIG. 14, as shown in FIG. 20, the new guidance spot "Ohirabokujo" is added between "Nishizawakeikoku" and selected "Shosenkyo". In this case, the estimated moving time displayed between "Nishizawakeikoku" and "Shosenkyo", which are positioned side by side mutually before the adition, is deleted from the display as hidden information.

### [2-6-2. Example of change]

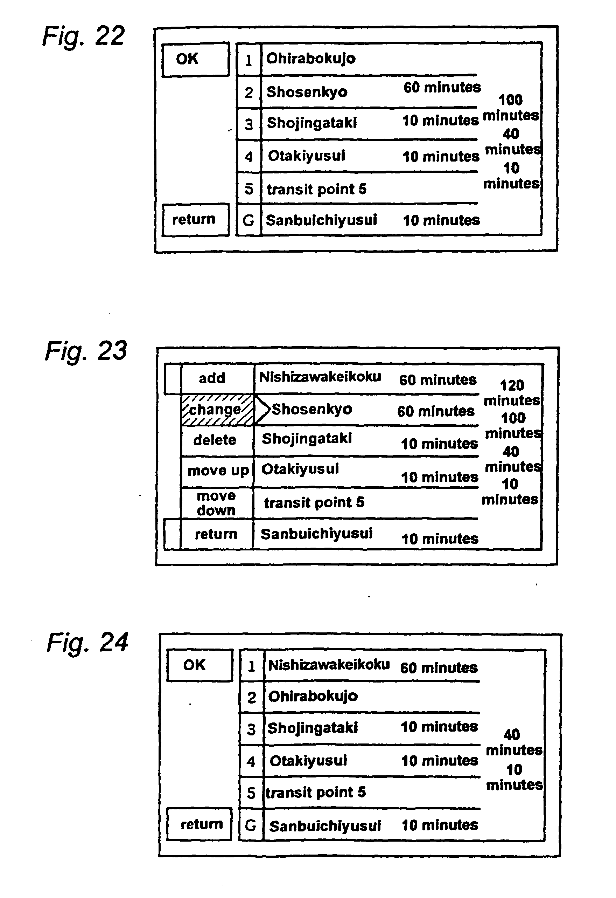

Then, an example of "change" is shown. For example, when the changing process to "Ohirabokujo" is carried out by selection the "change" of the transit point 1 "Nishizawakeikoku" (FIG. 21) in the guidance course having the content shown in FIG. 14, the present transit point 1 "Nishizawakeikoku" is changed into the new guidance spot "Ohirabokujo" (FIG. 22). In this case, the recommended sightseeing time on the original guidance spot "Nishizawakeikoku" and the estimated moving time between the original guidance spot "Nishizawakeikoku" and the remaining "Shosenkyo" are deleted from the display as the hidden information.

Also, when the changing process to "Ohirabokujo" is carried out by selection the "change" of the transit point 2 "Shosenkyo" (FIG. 23) in the guidance course having the content shown in FIG. 14; the present transit point 2 "Shosenkyo" is changed into the new guidance spot "Ohirabokujo" (FIG. 24). In this case, the recommended sightseeing time on the original guidance spot "Shosenkyo", the estimated moving time between the remaining "Nishizawakeikoku" and the original guidance spot "Shosenkyo", and the estimated moving time between the original guidance spot "Shosenkyo" and the remaining "Shojingataki" are deleted from the display as the hidden information.

### [2-6-3. Example of delete]

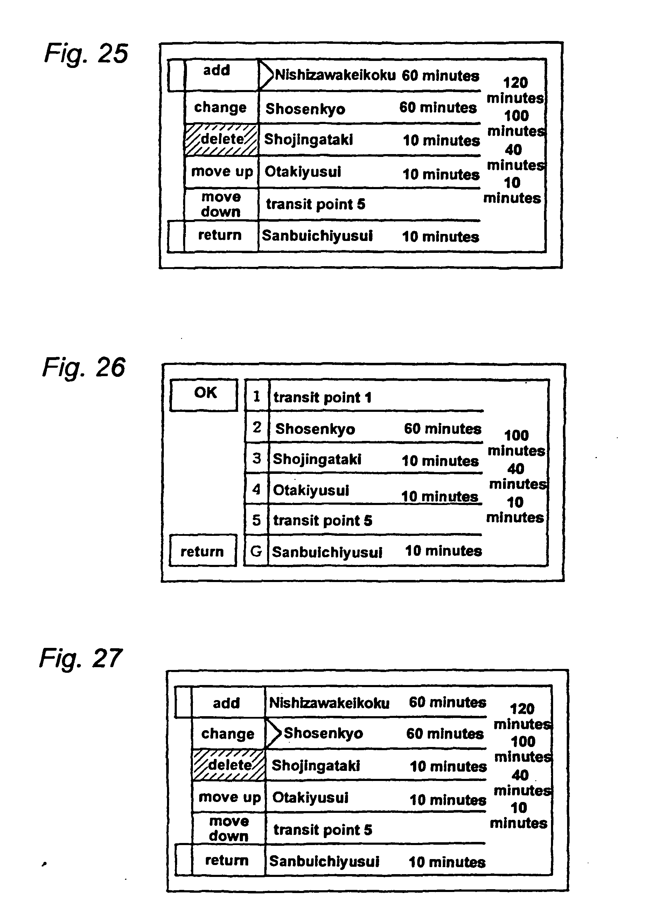

Then, an example of "delete" is shown. For example, if "delete" is applied to "Nishizawakeikoku" (FIG. 25) in the guidance course having the content shown in FIG. 14, the temporary name "transit point 1" is displayed in the column on which "Nishizawakeikoku" is displayed up to now (FIG. 26) . In this case, the recommended sightseeing time on the deleted guidance spot "Nishizawakeikoku" and the estimated moving time between the deleted guidance spot "Nishizawakeikoku" and the remaining "Shosenkyo" are deleted from the display as the hidden information.

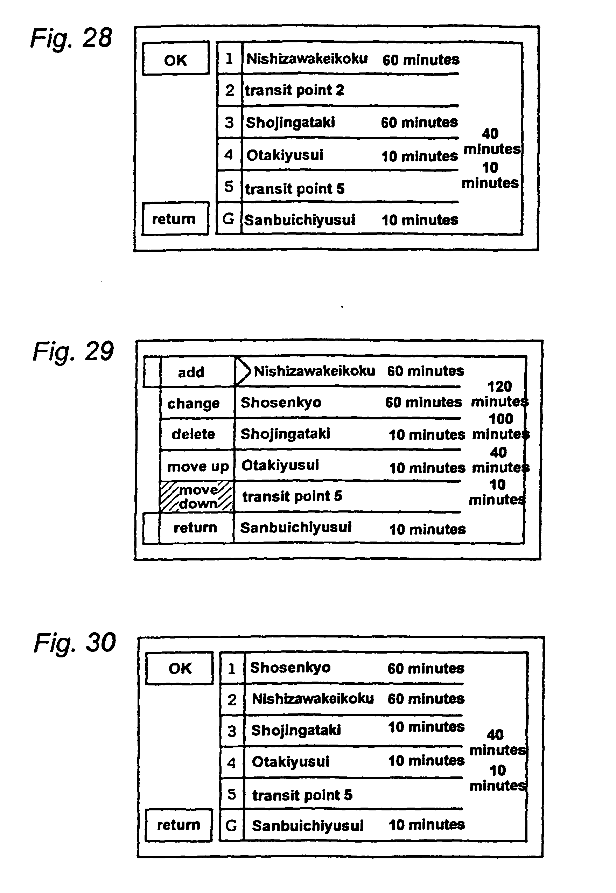

Also, if "delete" is applied to "Shosenkyo" (FIG. 27) in the guidance course having the content shown in FIG. 14, the temporary name "transit point 2" is displayed in the column on which "Shosenkyo" is displayed up to now (FIG. 28) . In this case, the recommended sightseeing time on the deleted guidance spot "Shosenkyo", the estimated moving time between the remaining "Nishizawakeikoku" and the deleted guidance spot "Shosenkyo", and the estimated moving time between the deleted guidance spot "Shosenkyo" and the remaining "Shojingataki" are deleted from the display as the hidden information.

### [2-6-4. Example of move down]

Then, an example of "move down" is shown. For example, "move down" of the transit point 1 "Nishizawakeikoku" is carried out (FIG. 29) in the guidance course having the content shown in FIG. 14, "Nishizawakeikoku" is moved down by one to exchange with "Shosenkyo" (FIG. 30). In this case, the estimated moving time between the exchanged "Nishizawakeikoku" and the exchanged "Shosenkyo", and the estimated moving time between "Shosenkyo" before the exchange and the remaining "Shojingataki" are deleted from the display as the hidden information.

Such estimated moving times between the mutually exchanged guidance spots may be displayed as they are if there is no element to affect the estimated moving time such as one-way road in the middle.

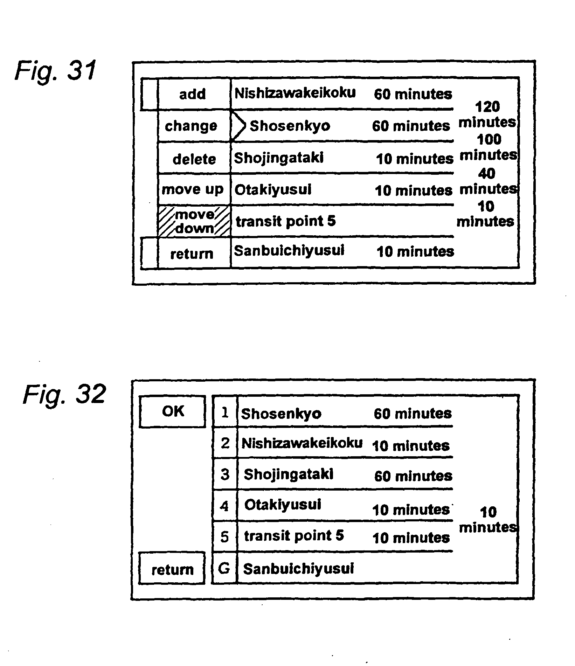

Also, "move down" of the transit point 2 "Shosenkyo" is carried out (FIG. 31) in the guidance course having the content shown in FIG. 14, "Shosenkyo" is moved down by one to exchange with "Shojingataki" (FIG. 22) . In this case, the estimated moving time between the remaining "Nishizawakeikoku" and the exchanged "Shosenkyo", the estimated moving time between the exchanged "Shosenkyo" and the exchanged "Shojingataki", and the estimated moving time between the exchanged "Shojingataki" and the remaining "Otakiyusui" are deleted from the display as the hidden information.

### [2-7. Process after the edition]

Then, if the edition conducted as above is ended (STEP14), the re-set section 248 re-sets the route based on the guidance course after the edition (STEP16) and also the edited result store section 249 stores the information representing the edited result (STEP18), according to the user's selection (STEP15, STEP17).

In other words, if the route is re-set in this manner, the user can travel on the running route along the edited results by the operation of the guide section 247. Also, for example, in the event that the course information indicating the contents of the guidance course are recorded on the CD-ROM, when the information indicating the edited results are stored separately in the memory by the operation of the edited result store section 249 as described above, it is possible to utilize easily the guidance course along the user's desire, e.g., the edited guidance course may be selected by the course select section 242 to re-use after that, the original guidance courses may be utilized by canceling the edition, the edited guidance course may be edited once again, etc.

### [3. Advantages]

As described above, in the present example, since the edition such as new addition and deletion of the spots in the selected guidance course, exchange of the routing order, etc. can be carried out by the operation of the edit section 243 before and after the route setting, the guidance of the route can be utilized freely along the user's desire. Also, in the present embodiment, since the information, which are not to be displayed by the edition, out of the course information indicating the contents of the guidance course is not displayed by the operation of the control section 245, it becomes easy to understand the edited contents of the guidance course appropriately.

In addition, in the present example, if the guidance course is edited even after the route has been set based on the guidance course, the route is re-set by the operation of the re-set section 248 based on the edited guidance course. Therefore, in the situation that circumstances or a feeling of the user is changed after the route guidance has been started along the route, the route guidance can be achieved to meet to the user's desire. Also, in the present embodiment, if the information representing the edited results, e.g., contents of the edited guidance course, contents changed by the edition, etc., are stored by the operation of the edited result store section 249, it becomes easy to re-use the edited results or cancel the edition.

### [4. Other example]

For example, the present invention may be applied to not only the car but also other type of mobile body such as the motor bicycle. Moreover, the number of previously prepared guidance courses, the number of spots contained in individual guidance courses, etc. can be set freely. For example, the number of spots contained in individual guidance courses may be set variably.

Besides, concrete editing types of the spots are set arbitrarily. For example, the edition makes it possible to reverse the routing order of the overall guidance course, etc. In addition, the concrete contents of the course information are not limited to the necessary time and the traveling time and thus may be set freely. Also, how to change the displayed course information according to the type of edition may be set freely.

Also, according to above examples, the information of the previously prepared guidance courses are stored in the CD-ROM and the edited results are stored in the memory. However, the type of the storing device employed to store these information may be free. For example, these information may be stored in other types of storing devices such as the hard-disk drive, the DVD-RAM, etc. by combining them together.

As described above, since the navigation technology, i.e., the navigation system and method capable of editing the guidance course such as add, delete, change, exchange of the spots and the recording medium for recording the navigation softwares can be provided, the convenience of operating the navigation can be improved.

Next, plural examples not being part of the present invention (called "present examples" hereinafter) will be explained in detail with reference to the accompanying drawings hereinafter. The present examples can be implemented by controlling a computer having various hardware devices by using the softwares of the computer. In this case, the softwares are constructed by combining instructions together in compliance with the description of this specification, and approaches set forth in the prior art may be utilized in the common parts to the above prior art.

Also, the softwares contain not only program codes but also data prepared to execute the program codes. Also, operations and advantages of the present invention can be achieved by using actively physical processing devices such as the CPU, various circuits, etc. incorporated into the computer.

In this case, configurations of concrete hardwares and softwares to implement the present invention can be modified variously. For example, when a certain function is implemented by the physical electronic circuit such as LSI in answer to the circuit configuration and the processing capability of the CPU, such function can also be implemented by the softwares. Also, the execute module, the intermediate code, the higher level language, etc. may be considered as the format of the softwares. In addition, the computer-readable recording medium for recording the softwares to implement the present invention is one embodiment of the present invention as a single body.

### [1. Configuration]

First, the present example shows the navigation system (called a "present system" hereinafter) mounted on the car as the mobile body to guide the route and the navigation method executed on this navigation system, and can be grasped as the recording medium for recording the navigation softwares to implement them.

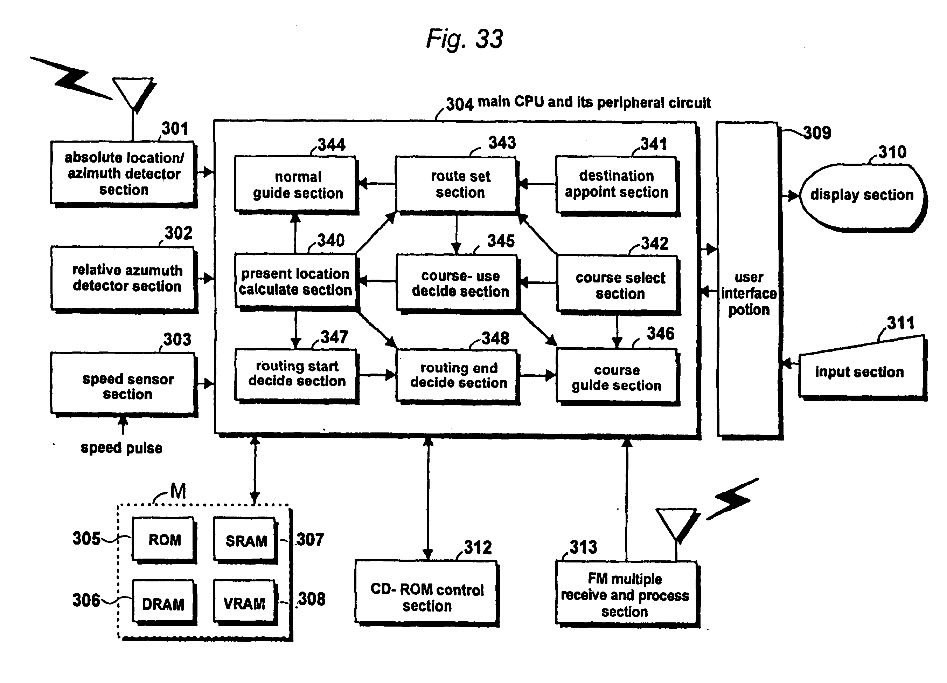

In particular, the present example shows an example in which, if the course is used to set the route in the above navigation technology, the guidance which fits for the purpose of the course can be output by using the guidance such as the guidance voice having the different content from the normal case. Also, the present example shows another example in which the guidance that fits for the purpose of the course can be output at an appropriate timing by checking precisely respective routing points, through which the car goes toward the next routing point, in the above navigation technology. FIG. 33 is a functional block diagram showing the configuration of the present example.

### [1-1. Overall configuration]

That is, the present example comprises an absolute location/azimuth detector section 301, a relative azimuth detector section 302, a speed sensor section 303, a main CPU and its peripheral circuit 304, a memory group M, a user interface potion 309, a display section 310, an input section 311, a CD-ROM control section 312, and an FM multiple receive and process section 313.

In order to calculate the absolute location coordinate and the azimuth of the present location of the car (called "own car") on which the present system is mounted, i.e., own car location on the surface of the earth, the absolute location/azimuth detector section 301 receives the GPS radio wave transmitted from the GPS artificial satellite, for example, via the antenna and the receiver. Also, the relative azimuth detector section 302 detects the relative azimuth of own car by using the gyro, etc. Also, the speed sensor section 303 processes the speed pulse derived from the car to calculate the speed of own car.

Also, the main CPU and its peripheral circuit 304 executes a role of a control circuit for controlling the overall present system. The memory group M consists of various memories necessary for the operation of the present system. Out of these memories, for example, the ROM 305 stores previously BIOS, boot-up program, etc., and is accessed by the main CPU and its peripheral circuit 304 in starting the present system, etc. Also, the dynamic RAM (DRAM) 306 is used as the work area, etc., and the computer program to implement respective functions of the present system is loaded thereon.

Also, the static RAM (SRAM) 307 is a nonvolatile memory. That is, since the SRAM 307 is backed up by the battery during when the main power supply of the present system such as the accessory power supply of the car is turned OFF, such SRAM 307 still holds the memory contents to prepare for the situation the power supply is turned ON. The Video RAM (VRAM) 308 is a memory employed for video display on the display section 310.

The display section 310 outputs various information such as the map, the operation menu, etc. by using the liquid crystal display panel, the voice synthesizer (both not shown), etc. The user inputs various information such as the instruction, the destination, and the like into the present system via the input section 311 by using operation keys provided to the remote control unit, etc. Also, the user interface potion 309 connects the display section 310 and the input section 311 to the main CPU and its peripheral circuit 304 by using the I/O control circuit, the driver, etc.

Also, the CD-ROM control section 312 is a section for storing searched road data for representing respective roads and their locations, and map data containing display data, etc. and corresponds to a first storing section. Concretely the CD-ROM control section 312 is constructed to read the navigation system softwares, various information such as the map data, etc. from the CD-ROM. In this case, these information recorded on the CD-ROM are called the database in total.

Also, the CD-ROM control section 312 has a role as a second storing section for storing more than one course which traces a plurality of previously decided spots, i.e., the routing points. In other words, the course is information that correlates several spots such as tourist spots in a certain area, and plural courses are prepared in advance in the database in the above CD-ROM.

Also, the courses are named to attract user' s interest or to express the feature of the course, for example, "Waterfront Twilight Cruising Course", respectively. The courses that are decided personally by the user may be additionally registered later.

Also, the FM multiple receive and process section 313 receives the EM broadcasting wave. In addition, this FM multiple receive and process section 313 may be constructed to execute the process which picks up the traffic information of VICS from the received radio wave.

### [1-2. Roles of the main CPU and its peripheral circuit]

Then, the main CPU and its peripheral circuit 304 is constructed to perform roles of the present location calculate section 340, the destination appoint section 341, the course select section 342, the route set section 343, the normal guide section 344, the course-use decide section 345, the course guide section 346, the routing start decide section 347, and the routing end decide section 348, by actions of the above softwares.

The present location calculate section 340 is a section for calculating the present location of own car, i.e., own car location. Concretely the present location calculate section 340 is constructed to calculate own car location by combining the GPS navigation and the self-contained navigation together. Here the GPS navigation calculates the present location by using the information obtained from the absolute location/azimuth detector section 301, based on the radio wave transmitted from the artificial satellite. Also, the self-contained navigation calculates the present location by using the information obtained from the relative azimuth detector section 302 and the speed sensor section 303, based on the earth magnetism and the speed of own car.

Also, the destination appoint section 341 is a section for appointing the destination of the route guidance by the present system. For example, the destination may be pointed on the map displayed on the screen of the display section 310 by a cursor, or appointed based on searched results after the destinations are searched from the map data based on conditions such as a gasoline service station, a convenience store, a family restaurant, etc. near own car location.

Also, the course select section 342 is a section for selecting the desired course from a plurality of courses stored in the above database that is accessed by the CD-ROM control section 312.

Also, the route set section 343 is a section for setting the guided route based on the appointed destination or the selected course, and also a section for calculating and setting the following route based on the map data read out by the CD-ROM control section 312.

That is, if the destination is appointed by the destination appoint section 341 and also the course is selected by the course select section 342, the route set section 343 calculates and sets the optimum route which starts from the present location and reaches the destination via the routing points in the course.

In addition, if the destination is appointed by the destination appoint section 341 but the course is not selected, the route set section 343 calculates and sets the optimum route which goes to the destination from the present location. In contrast, if the course is selected by the course select section 342 but the destination is not appointed, the route set section 343 regards the last point in the course as the destination and then calculates and sets the optimum route which reaches this destination via remaining routing points.

Also, the normal guide section 344 is a first guiding section for outputting a first guidance concerning the route set by the route set section 343 as the voice-synthesized guidance voice, based on the road data and the present location read out by the CD-ROM control section 312. Such guidance voice concerning the route is called the normal guidance voice.

Also, the course-use decide section 345 is a section for deciding whether or not the course is used in setting the route by the route set section 343. Also, the course guide section 346 is a second guiding section for outputting a second guidance, which is different from the normal guidance voice, as the voice-synthesized guidance voice when the course is used in setting the route.

In this manner, the guidance voice that is output only when the course is used and is different from the normal guidance voice is called the course dedicated guidance voice. The contents of the course dedicated guidance voice are decided along the purpose of the course such as the name and the feature of the course, tourist guidance of the routing points, etc.

Also, the routing start decide section 347 and the routing end decide section 348 constitute a decide section for deciding that own car starts to run toward the next routing point or destination (called the point or spot) via several routing points which have already been passed through, based on the present location by checking respective routing points in the course used in setting the route.

That is, the routing start decide section 347 is a first deciding section for deciding that the present location enters into a first distance determined previously based on the routing point in the course. The routing end decide section 348 is a second deciding section for deciding that own car starts to run toward the next point via the routing point when own car goes out of a second distance determined previously based on the routing point after it has been decided that the present location enters into the first distance.

Also, the course guide section 346 is constructed to output the second guidance as for the next routing point or destination when it is decided that own car starts to run toward the next routing point or destination via the routing point in the course.

### [2. Operation]

The present example constructed as above operates as described in the following.

### [2-1. Destination setting and Normal guidance]

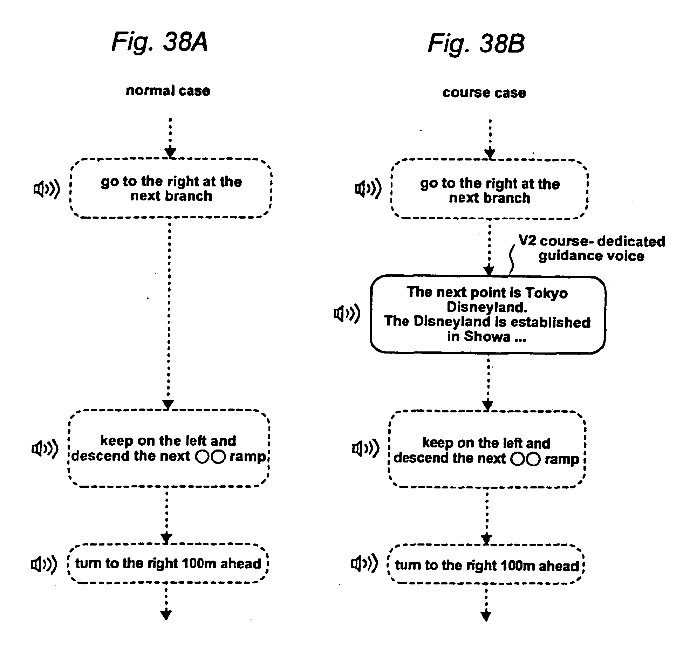

First, in the present example, if only the destination is appointed by the destination appoint section 341 without the use of the course, the normal guidance voice to guide only the route can be output by the operation of the normal guide section 344, like the prior art (FIG. 38A).

### [2-2. Course selection]

Also, in the present example, if the destination is appointed by the destination appoint section 341 and also the course is selected by the course select section 342, the course dedicated guidance voice can be output by the operations of the course-use decide section 345, the course guide section 346, etc.

That is, the destination may be selected by pointing it on the map displayed on the screen by virtue of a pointer, a cursor, or the like, or searching it based on the area or the name, types of landmarks such as the gasoline service station, the convenience store, the family restaurant, etc. Then, the route calculation, i.e., the route setting can be started by executing predetermined operations after the destination is set. In addition, the route setting can be started after the course is selected as follows.

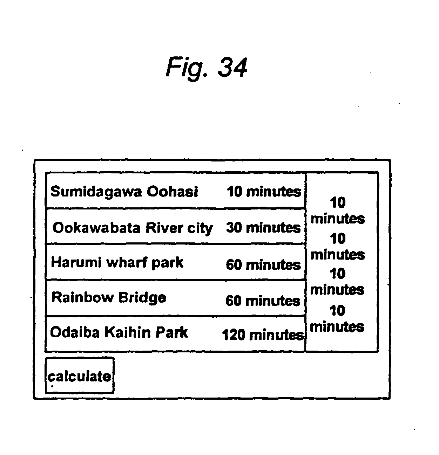

Here, the course may be selected by searching a plurality of courses registered previously in the database based on the area, the name, etc. For example, when the user calls the screen that lists the names of course by virtue of predetermined operations and the scroll of the screen and then selects the name of the most suitable course or the favorite course, the screen showing concrete contents of the selected course is called, as shown in FIG. 34.

Various information may be added to respective courses stored in the database. For example, in the example in FIG. 34, criterions of the necessary times for visiting and sightseeing respective facilities, i.e., routing points are set to 10 minutes, 30 minutes, 60 minutes, 60 minutes, and 120 minutes respectively, and normal estimated traveling times between the routing points are set to 10 minutes, 10 minutes, 10 minutes, and 120 minutes respectively.

In addition, the texts such as the explanation like the sightseeing guidance may be prepared previously in the database every routing point. Such texts may be displayed or not displayed on the screen. In the example of the course shown in FIG. 34, five routing points are displayed. But the actual number of routing points may set arbitrarily and thus set larger or smaller than five, and in addition the routing points may set variably.

Then, if the course displayed on the screen in this fashion coincides with the user's desired course, the user selects the course by executing the desired operation, e.g., pushing the calculation button.

### [2-3. Route setting and Preparation for guide voice]

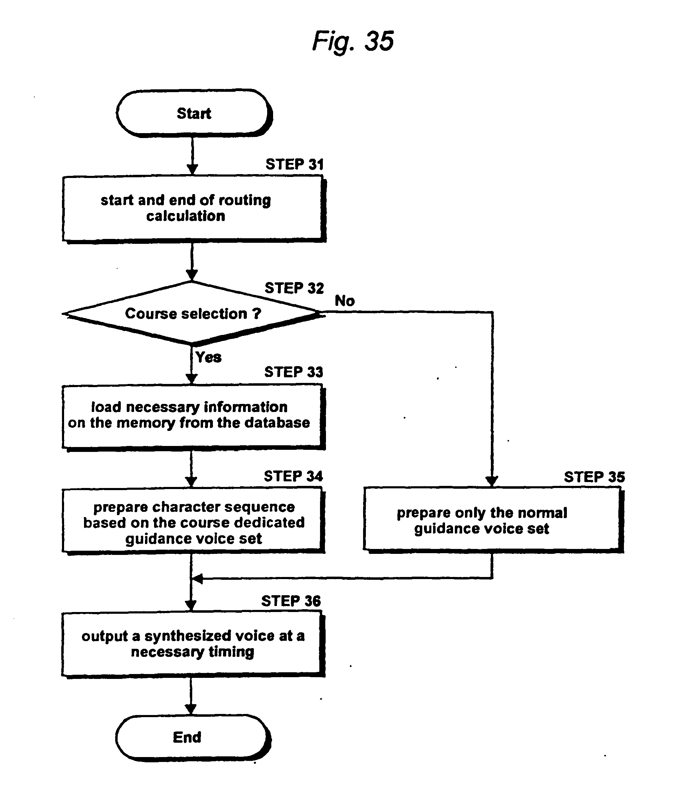

Here, FIG. 35 is a flowchart showing process procedures for preparing different guidance voices by calculating and setting the route. In other words, if the destination is appointed and the course is selected, the route set section 343 calculates and sets the optimum route that can reach the destination via the routing points in the course, based on the map data read out by the CD-ROM control section 312 (STEP31).

Following to the process for calculating and setting the route in this way, the process for preparing groups of guidance voices used in the guidance (called a set) on the memory is executed (STEP32 to STEP36). More particularly, first the course-use decide section 345 decides whether or not the course is selected by the course select section 342 and the course is used in setting the route by the route set section 343 (STEP32).

If the course is not selected in the decision in STEP32, i.e., the route is set based on only the destination appointed by the destination appoint section 341, the normal guide section 344 prepares a set of normal guidance voices (called a normal guidance voice set) on the memory (STEP35).

In contrast, if the course is selected in the decision in STEP32, the course guide section 346 prepares a set of course dedicated guidance voices (called a course dedicated guidance voice set) on the memory. Here, the course dedicated guidance voice set is not always fixed and is different course by course.

In order to prepare such course dedicated guidance voice set, the course guide section 346 reads necessary information of the course, e.g., course name, routing point names, sentences to explain the routing points, etc. from the database by sending a signal to the CD-ROM control section 312, and then loads such information on the memory (STEP33). Then, the course guide section 346 prepares the course dedicated guidance voice set on the memory by applying the necessary process such as format conversion to the information loaded in this way (STEP34).

The normal guidance voice set and the course dedicated guidance voice set are character sequence groups serving as a basis of the guidance voices, and their concrete contents may be set arbitrarily. For example, the course dedicated guidance voice set may contain the normal guidance voice set, otherwise the normal guidance voice set and the course dedicated guidance voice set are used in combination. In this disclosure, assume that the normal guidance voice set and the course dedicated guidance voice set are used together in the route guidance based on the course selection.

### [2-4. Guidance and its start]

That is, in the route guidance based on the course selection, so to speak, the normal guide section 344 takes charge of the guidance of the route and the course guide section 346 takes charge of the guidance of the sightseeing. In detail, the normal guide section 344 outputs the normal guidance voice to guide the route by using the present location of own car, the set route, the contents in the database, and the normal guidance voice set prepared as above.

Meanwhile, the course guide section 346 outputs the course dedicated guidance voice to guide the feature and tourist point of the routing points, etc. by using the present location of own car, the set route, the contents in the database, and the course dedicated guidance voice set prepared as above. Upon such guiding, the present location calculate section 340 calculates sequentially the present location of own car, i.e., own car location by employing the GPS navigation and the self-contained navigation in combination.

Then, the guidance voice is output by the synthesized voice at a necessary timing based on the normal guidance voice set and the course dedicated guidance voice prepared on the memory as above (STEP36).

For example, in the prior art, in starting the guidance mentioned above, simply the guidance voice such as "the navigation is started" can be output at all times by the normal guidance voice. In the present embodiment, for example, if the course name such as "the coast driving course" is prepared on the memory, the character sequence such as "the guidance for the coast driving course" can be generated by attaching the fixed character sequence such as "the guidance for.." and also the announce generated based on this character sequence can be output as the guidance voice.

In addition, for example, the character sequence such as "the driving course from the Sumidagawa Oohashi to the Odaiba kaihin park" can be generated by attaching the fixed character sequences to the name of the first routing point, the name of the last routing point, and the name of the destination in the course shown in FIG. 34 respectively, and also the announces generated based on these character sequences can be output as the guidance voices.

### [2-5. Decision of Point routing]

Also, while using the course dedicated guidance voice set prepared previously on the memory as mentioned above, the course dedicated guidance voices such as the explanation sentences of respective routing points are output by the synthesized voices serving as the guidance voices by virtue of operations of the routing start decide section 347, the routing end decide section 348, and the course guide section 346.

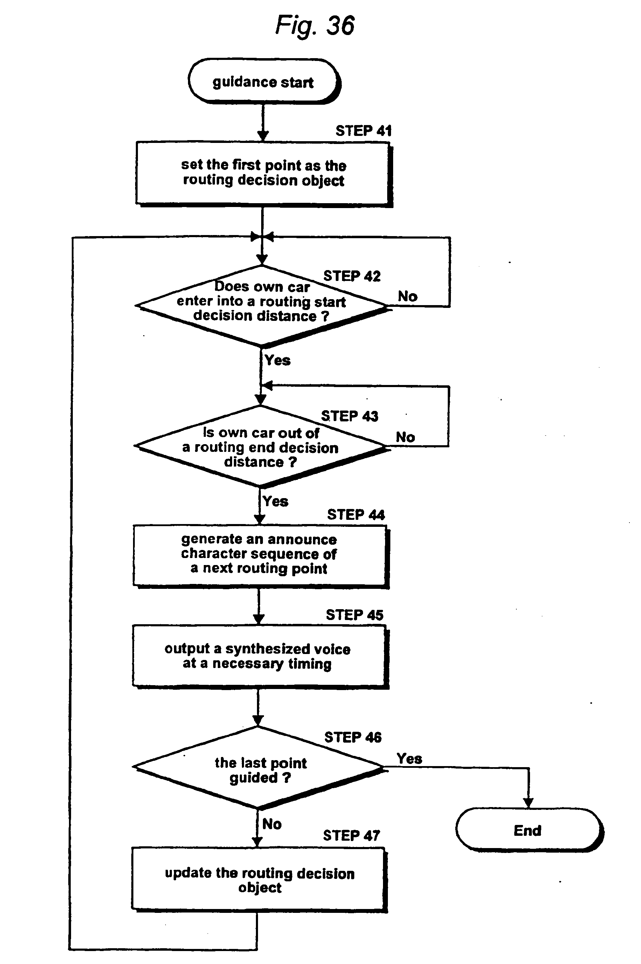

FIG. 36 is a flowchart showing process procedures for executing the guidance of respective routing points. In these procedures, the routing start decide section 347 and the routing end decide section 348 check respective routing points in the course used in setting the route so as to decide that own car starts to run toward the next point via the routing point, based on the present location. Then, if it is decided so, the course guide section 346 outputs the guidance such as the explanation of the next point, etc.

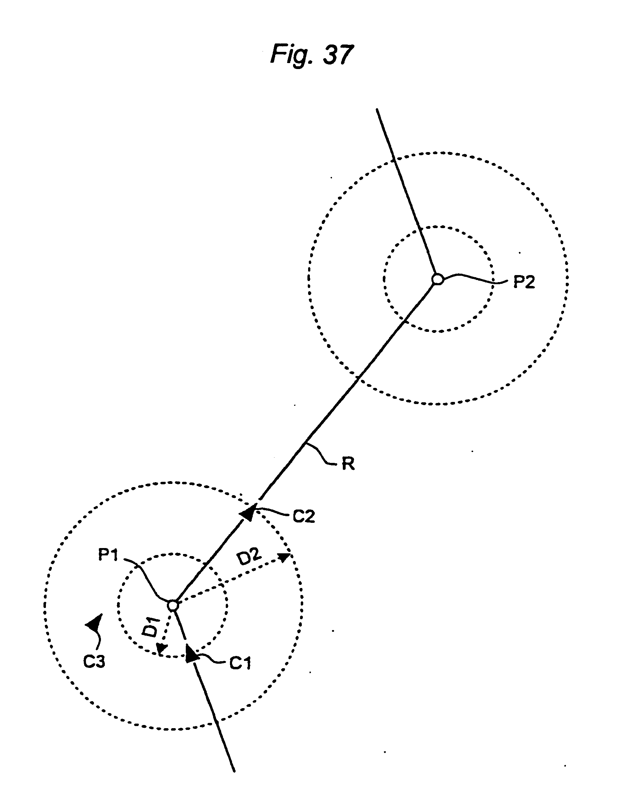

FIG. 37 is a conceptual view showing the principle to decide whether or not own car starts to travel toward the next point via respective routing points, by using a routing start decision distance D1 and a routing end decision distance D2. That is, in FIG. 37, a solid line R indicates the set route R, black triangle marks indicates own car locations C1, C2, C3 respectively, and circles on the route R indicate the routing points P1, P2 respectively. Also, as with broken-line circles around the routing points P1, P2, a smaller broken-line circle indicates the routing start decision distance D1 and a larger broken-line circle indicates the routing end decision distance D2.

The routing start decision distance D1 and the routing end decision distance D2 are distances being set on the softwares respectively. The routing start decision distance D1 corresponds to the above first distance. When own car location enters into the routing start decision distance D1 from this routing point, it is regarded that the routing point has been passed through.

The routing end decision distance D2 corresponds to the above second distance. If own car location goes out of the routing end decision distance D2 from the routing point after own car location has entered into the routing start decision distance D1 once, it is regarded that own car starts to go toward the next point.

More specifically, for example, about 300 m may assigned as the routing start decision distance D1 and, for example, about 800 m may assigned as the routing end decision distance D2. That is, as for conspicuous facilities which can serves as the tourist spots, if the location coordinate of own car location does not perfectly coincide with the facilities but own car location comes close to about 300 m, normally the system may accomplish its purpose since the user can sight-see by traveling around the facilities. Then, it may be guessed normally that, when own car runs away from that location by almost 1 km after this, the system has accomplished its purpose. In this case, 300 m and 800 m are mere examples as the routing start decision distance D1 and the routing end decision distance D2 respectively, and different distances may be adopted according to the situation of the course and the application.

Then, in the procedures in FIG. 36, when the guidance is started, at first the first routing point in the course is set as the routing decision object (STEP41). Then, for example, if the routing point P1 in the example in FIG. 37 is selected as the object of decision, the routing start decide section 347 decides whether or not own car location enters into the routing start decision distance D1 from the routing point P1 in the course R at a point of time when own car approaches the location C1 (STEP42).

After it is decided that own car location has entered into the routing start decision distance D1 from the routing point in this way, the routing end decide section 348 then decides whether or not own car location goes out of the routing end decision distance D2 from the routing point P1 at a point of time when own car approaches the location C2 (STEP43). In other words, this decision signifies that own car starts to run toward the next routing point P2 via the routing point P1.

In the present example, for example, in the even that the user cannot reach the routing point P2 to lose the way but own car is directed to the routing point P2 by accident at the own car location C3 on the outside of the routing start decision distance D1, or own car goes out of the routing end decision distance D2 from the own car location C3 not to pass through the routing start decision distance D1 while losing the way, the guidance of the routing point P2 is not given because of the above process.

### [2-6. Output of the course dedicated guidance voice]

In this fashion, if it is decided that own car has started to go to the next routing point P2 via the routing point P1, the course guide section 346 generates the character sequence by applying necessary process such as picking-up, rearrangement, addition, etc. of the character sequence to the course dedicated guidance voice set so as to announce the explanation of the next routing point P2 (STEP44).

Then, the course guide section 346 outputs the synthesized voice at a necessary timing (STEP45). In this case, the necessary timing can be defined arbitrarily. For example, the period when the normal guide section 344 is outputting the normal guidance voice is avoided. Then, it is decided whether or not the last point is guided (STEP46). If it is decided that the last point has been guided, the guidance process is ended. In contrast, if it is decided that the last point has not been guided, the routing decision object is updated (STEP47). Then, the process returns to STEP42 and then the guidance process is repeated until the last point is guided.

FIG. 38 is a view showing examples of the guidance voice using only the normal guidance voice in the prior art (38A) and the guidance voice using the course-dedicated guidance voice together (38B), to compare them with each other. More particularly, according to the present example, as the result of the above process, not only the normal guidance of the route, as shown in FIG. 38A, but also the course- dedicated guidance voice V2 announce such as "The next point is Tokyo Disneyland. The Disneyland is established in Showa..", for example, by using the name of the next routing point and the sentence to explain the next routing point, as shown in FIG. 38B, can be output.

### [3. Advantages]

As described above, in the present example, if the course is employed in setting the route, the guidance such as the guidance voice which has the different content from the normal case, etc. can be output by the operations of the course-use decide section 345 and the course guide section 346. Accordingly, variations on the guidance become abundant and thus the practical use of the course can be achieved effectively.

In particular, in the present example, the announcement, i.e., the guidance of the next spot can be output by the operations of the routing start decide section 347 and the routing end decide section 348 at an appropriate timing which is in synchronism with a point of time when own car starts to the next routing point or destination via the routing point in the course and thus the awareness of the user is just switched to the next spot.

Therefore, there are not caused such problems that the thinking or the conversation of the user is interrupted by the guidance of the next spot which is issued at the moment that own car is directed unexpectedly to the next spot, etc. although the user is now in sightseeing while traveling around a certain routing point, or the user becomes anxious since the guidance is not announced at all although own car travels fairly toward the next spot, or the like. In other words, the user can get the information of the next spot beforehand at an appropriate timing that is neither early nor late, and thus the course can be used effectively.

Also, in the present example, based on such a simple criterion that own car reaches the first distance close sufficiently to the routing point and then goes away from the second distance which is remoter than the first distance, it can be decided precisely by the operations of the routing start decide section 347 and the routing end decide section 348 that own car starts to run toward the next routing point or destination after the user has finished the sightseeing of the routing point. Therefore, the system is ready to install and the burden of the information process for the navigation can be reduced.

### [4. Other example]

For example, the present invention may be applied to not only the car but also other type of mobile body such as the motor bicycle. Moreover, details such as the contents of the guidance voice, the number of previously prepared courses, the number of spots contained in individual courses, etc. can be set freely.

Besides, it is not indispensable to output the first guidance concerning the route and the second guidance concerning the explanation of the routing point by the synthesized voice. It is possible to output one of the guidances by the voice and output the other by the character on the screen of the display, otherwise it is possible to output both of the guidances by the character on the screen of the display and generate the signal sound at the same time.

Furthermore, the concrete approach for deciding whether or not own car starts to run toward the next routing point or destination via the routing point in the course can be set freely. Other criterion and other calculation process may be employed in the decision.

As described above, according to the present invention, if the course is employed in setting the route, the navigation technology, i.e., the navigation system and method for outputting the guidance to fit for the purpose of the course and the recording medium for recording the navigation softwares can be provided by employing the guidance such as the guidance voice which has the different content from the normal case. Therefore, the convenience of operating the navigation can be improved.

Next, plural examples (called "present examples" hereinafter) will be explained in detail with reference to the accompanying drawings hereinafter. The present examples can be implemented by controlling a computer having various hardware devices by using the softwares of the computer. In this case, the softwares are constructed by combining instructions together in compliance with the description of this specification, and approaches set forth in the prior art may be utilized in the common parts to the above prior art.

Also, the softwares contain not only program codes but also data prepared to execute the program codes. Also, operations and advantages of the present invention can be achieved by using actively physical processing devices such as the CPU, various circuits, etc. incorporated into the computer.

In this case, configurations of concrete hardwares and softwares to implement the present invention can be modified variously. For example, when a certain function is implemented by the physical electronic circuit such as LSI in answer to the circuit configuration and the processing capability of the CPU, such function can also be implemented by the softwares. Also, the execute module, the intermediate code, the higher level language, etc. may be considered as the format of the softwares. In addition, the computer-readable recording medium for recording the softwares to implement the present invention is one embodiment of the present invention as a single body.

### [1. Configuration]

First, the present example shows the navigation system (called a "present system" hereinafter) mounted on the car as the mobile body to guide the route and the navigation method executed on this navigation system, and can be grasped as the recording medium for recording the navigation softwares to implement them.

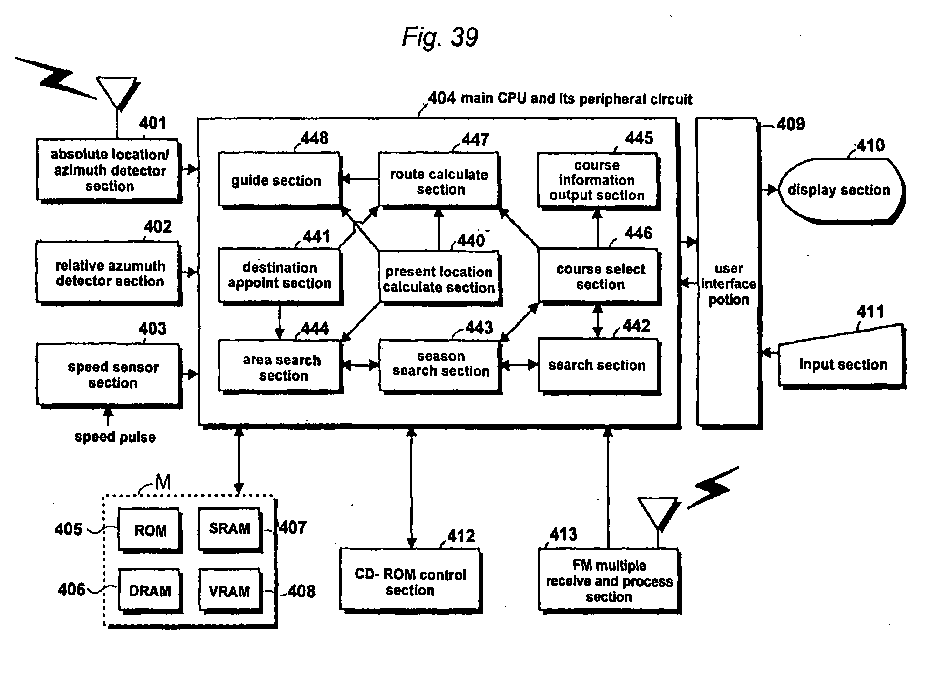

In particular, the present example shows an example in which the guidance course which fits for the user's desire can be easily searched in the above navigation technology. FIG. 39 is a functional block diagram showing the configuration of the present example.

### [1-1. Overall configuration]

That is, the present example comprises an absolute location/azimuth detector section 401, a relative azimuth detector section 402, a speed sensor section 403, a main CPU and its peripheral circuit 404, a memory group M, a user interface potion 409, a display section 410, an input section 411, a CD-ROM control section 412, and an FM multiple receive and process section 413.

In order to calculate the absolute location coordinate and the azimuth of the present location of the car (called "own car" hereinafter) on which the present system is mounted, i.e., own car location on the surface of the earth, the absolute location/azimuth detector section 401 receives the GPS radio wave transmitted from the GPS artificial satellite, for example, via the antenna and the receiver. Also, the relative azimuth detector section 402 detects the relative azimuth of own car by using the gyro, etc. Also, the speed sensor section 403 processes the speed pulse derived from the car to calculate the speed of own car.

Also, the main CPU and its peripheral circuit 404 executes a role of a control circuit for controlling the overall present system. The memory group M consists of various memories necessary for the operation of the present system. Out of these memories, for example, the ROM 405 stores previously BIOS, boot-up program, etc., and is accessed by the main CPU and its peripheral circuit 404 in starting the present system, etc. Also, the dynamic RAM (DRAM) 406 is used as the work area, etc., and the computer program to implement respective functions of the present system is loaded thereon.

Also, the static RAM (SRAM) 407 is a nonvolatile memory. That is, since the SRAM 407 is backed up by the battery during when the main power supply of the present system such as the accessory power supply of the car is turned OFF, such SRAM 407 still holds the memory contents to prepare for the situation the power supply is turned ON. The Video RAM (VRAM) 408 is a memory employed for video display on the display section 410.

The display section 410 outputs various information such as the map, the operation menu, etc. by using the liquid crystal display panel, the voice synthesizer (both not shown), etc. The user inputs various information such as the instruction, the destination, and the like into the present system via the input section 411 by using operation keys provided to the remote control unit, etc. Also, the user interface potion 409 is an interface that connects the display section 410 and the input section 411 to the main CPU and its peripheral circuit 404 by using the I/O control circuit, the driver, etc.

Also, the CD-ROM control section 412 is a section for reading the navigation system softwares recorded on the CD-ROM and the database that records the data employed by the softwares. The database stores the searching road data that represents the roads and their locations, the display data, and a plurality of data concerning the guidance courses that trace a plurality of spots.

The guidance course is information that correlates several spots such as tourist spots in a certain area. Also, the guidance courses are named to attract user's interest or to express the feature of the course, for example, "Waterfront Twilight Cruising Course", respectively. The guidance courses that are decided personally by the user may be additionally registered later.

Also, the data concerning the guidance course is called course data, and each course data contains a field of a plurality of search keys. Then, respective values assigned to individual search keys of the guidance courses are recorded on these fields of the course data. Also, the FM multiple receive and process section 413 receives the FM broadcasting wave. In addition, this FM multiple receive and process section 413 may be constructed to execute the process which picks up the traffic information of VICS from the received radio wave.

### [1-2. Roles of the main CPU and its peripheral circuit]

Then, the main CPU and its peripheral circuit 404 is constructed to perform roles of the present location calculate section 440, the destination appoint section 441, the search section 442, the season search section 443, the area search section 444, the course information output section 445, the course select section 446, the route calculate section 447, and the guide section 448, by actions of the above softwares.

The present location calculate section 440 is a section for calculating the present location of own car, i.e., own car location. Concretely the present location calculate section 440 is constructed to calculate own car location by combining the GPS navigation and the self-contained navigation together. Here the GPS navigation calculates the present location by using the information obtained from the absolute location/azimuth detector section 401, based on the radio wave transmitted from the artificial satellite. Also, the self-contained navigation calculates the present location by using the information obtained from the relative azimuth detector section 402 and the speed sensor section 403, based on the earth magnetism and the speed of own car.

Also, the destination appoint section 441 is a section for appointing the destination of the route guidance by the present system. For example, the destination may be pointed on the map that is displayed on the screen of the display section 410 by a cursor, or appointed based on searched results after the destinations are searched from the map data based on conditions such as a gasoline service station, a convenience store, a family restaurant, etc. near own car location.

Also, the search section 442 is a section for searching the guidance course from the database based on the search key. In the present embodiment, assume that theme, keyword, necessary time, and object are selected as the search keys. Also, the season search section 443 is a section for searching the guidance course suitable for the present season, based on date information used by the GPS navigation in the present location calculate section 440.

Also, the area search section 444 is an area searching section for searching the guidance course whose start point is within the designated distance, based on the present location of own car or the appointed destination in compliance with the user' s appointment. In this case, the search section 442, the season search section 443, and the area search section 444 are constructed to execute the multi- stage focusing search or the multiple condition search by using plural search keys if they are used to jointly operate mutually. Also, search keys for the seasons and the areas are provided appropriately to execute such search.

Also, the course information output section 445 is an outputting section for outputting information such as a list of the guidance courses, contents of individual guidance courses, etc. for the guidance courses stored in the database and the guidance courses hit by the search by using the display section 410. In particular, if there are a plurality of guidance courses that are hit within the above distance during the search by the area search section 444, the course information output section 445 is constructed to output these guidance courses in order of the guidance courses located closer to the own car location or the destination being designated in the search.

Also, the necessary times for touring the guidance courses, the necessary times for respective spots contained in the guidance courses, and the moving times between the spots are contained in the course data of the guidance courses. Then, the course information output section 445 is constructed to display plural guidance course and the necessary times for respective guidance course, or display the necessary time for respective spots contained in the guidance courses and the moving times between the spots.

Also, the course select section 446 is a section for selecting the desired course from the guidance courses read out from the above database or the guidance courses that are hit by the search.

Also, the route calculate section 447 is a section for calculating the route in the route guidance, based on the destination appointed by the destination appoint section 441 or the guidance course selected by the course select section 446. That is, the route calculate section 447 is constructed to calculate the route, as described in the following, based on the road data read out by the CD-ROM control section 412.

For example, if the destination is appointed by the destination appoint section 441 and also the guidance course is selected by the course select section 446, the route calculate section 447 calculates the optimum route that starts from the present location and reaches the destination via respective spots in the guidance course. Also, if the destination is appointed by the destination appoint section 441 but the route is not selected, the route calculate section 447 calculates the optimum route that reaches the destination from the present location.

Also, the guide section 448 is a section for guiding the route via the synthesized voice and the screen display along the route calculated by the route calculate section 447, based on the road data read out by the CD-ROM control section 412, the present location calculated by the present location calculate section 440, etc.

### [2_{.} Operation]

The present example constructed as above operates as described in the following.

### [2-1. Destination setting]

First, in order to utilize the route guidance in the present example, the destination is appointed by the operation of the destination appoint section 441. If the destination setting is omitted, the route setting may be carried out by regarding the last spot or the end point as the destination. Then, the destination may be selected by appointing it on the map displayed on the screen by using a pointer or a cursor, or searching it based on the area and the name, the type of the landmark such as the gasoline service station, the convenience store, the family restaurant, etc.

The route calculation may be started without using the guidance course by executing the predetermined operation after the destination has been set in this manner. But, in this disclosure, an example will be explained in which the guidance course is searched as follows and then selected.

### [2-2. Search type of the guidance course]

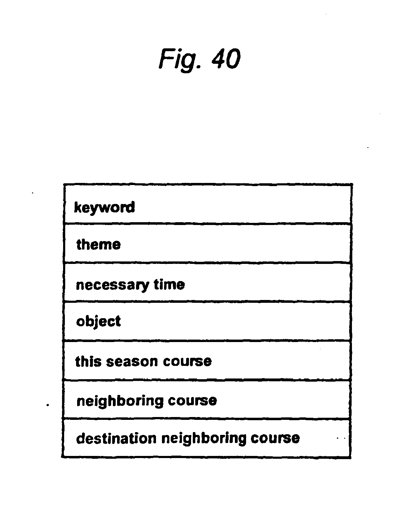

In order to search the guidance course, the user calls the screen for designating the type of the search via the predetermined operations and the shift of the screen. FIG. 40 shows a display example on the screen for appointing the search type in this manner. In addition to four types of search keys of "keyword", "theme", "necessary time", and "object", three types of search keys "this season course", "neighboring course", and "destination neighboring course" are also displayed.

In this case, if the search key of "keyword", "theme", "necessary time", or "object" is selected, the search section 442 performs the search to get the guidance course that can satisfy the values by selecting the values appointed by the search keys.

The "keyword" contains any words previously set in each course, for example, values such as "landscape", "flower", etc. Also, the "theme," contains character sequences previously set in each course, for example, values such as "beautiful valley, falls, and spring water visiting", etc. and also contains "names". Also, the "necessary time" indicates the normal estimated necessary time to travel about each course, for example, values such as "○ time Ominute", etc. Also, the "object" is the spot serving as the object guided along the course, for example, values such as "Nishizawakeikoku", "Shosenkyo", etc.

Also, the "this season course" searches the optimum guidance course in this season by the operation of the season search section 443 by getting the present data information from a timer used in the GPS navigation. In addition, the "neighboring course" and the "destination neighboring course" search the guidance courses, whose start point is located within a predetermined distance from the present location of own car or the appointed destination, by the operation of the area search section 444 in order of the shorter distances.

Particular examples of respective search types will be explained hereinafter. At first, since the searches using the search keys of "keyword", "theme", "necessary time", and "object" have similar processes as procedures mutually, searching procedures taken when the "keyword" is selected will be explained in detail as the typical example.

In the following example, the search for the season is carried out by the operation of the season search section 443, the search for the area is carried out by the operation of the area search section 444, and the search using remaining search keys is carried out by the operation of the search section 442. The display of the information such as selected items, guidance courses, contents of the guidance courses, etc. is conducted by the operation of the course information output section 445.

### [2-3. Search based on the keyword]

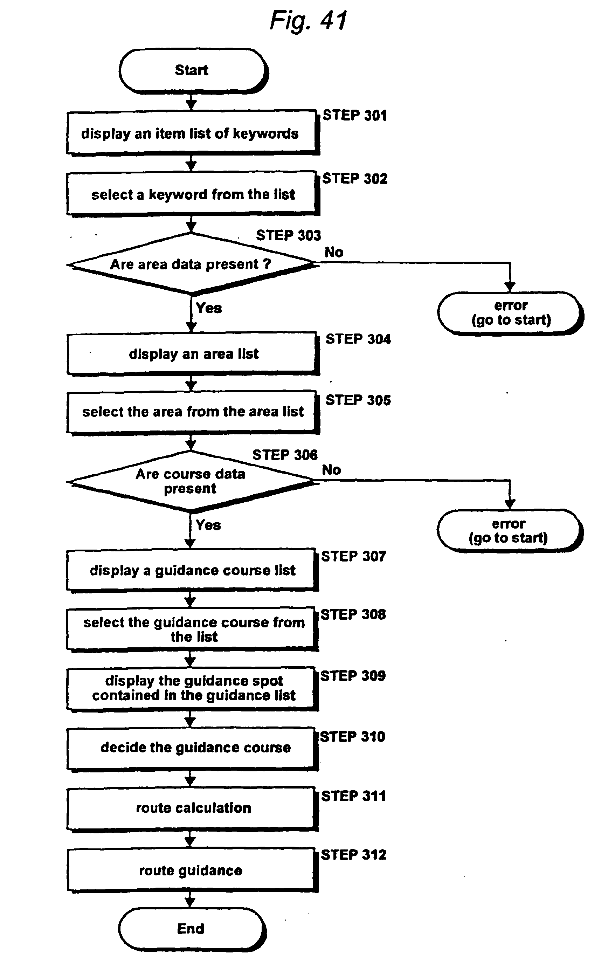

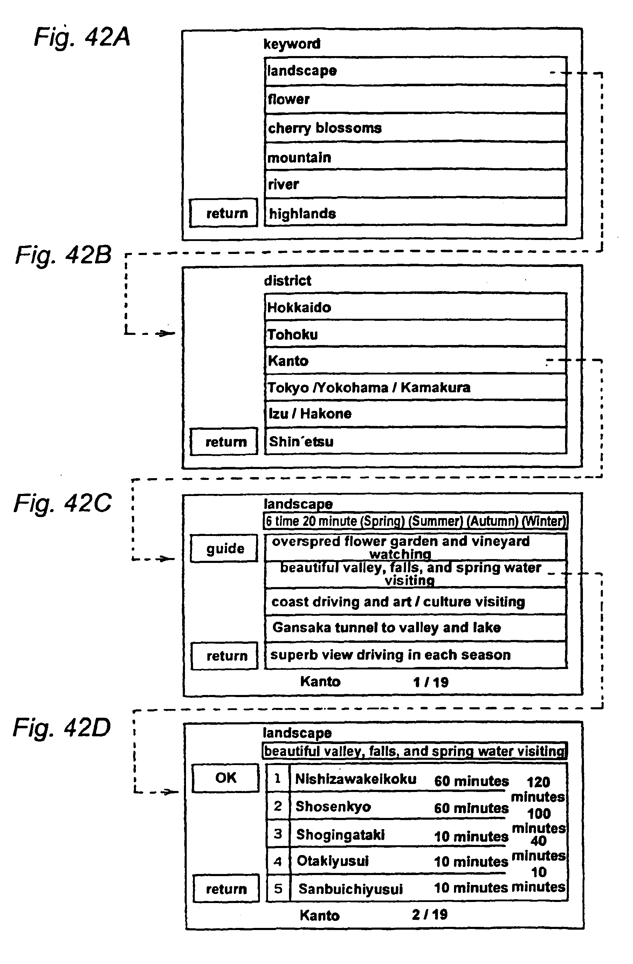

FIG. 41 is a flowchart showing the search based on the "keyword" and subsequent processes procedures. FIG. 42 is a view showing an example of the shift of the screen in the search based on the "keyword".

That is, if the "keyword" is selected from the search types displayed on the screen as shown in FIG. 40, the screen is switched to display an item list of keywords, as shown in FIG. 42A (STEP301). Respective items in this item list correspond to a list of particular values which the guidance course may contain when the "keyword" is selected as the search key.

Then, if "landscape", for example, is selected as the keyword from the list (STEP302), an area list which contains the "landscape" as the "keyword" is displayed on the screen, as shown in FIG. 42B (STEP304) . As such area list, for example, the area that corresponds to the keyword may be displayed by directly correlating a certain area with the keyword such as the "landscape", otherwise a list of areas obtained by sorting these guidance courses into areas may be displayed after the guidance courses containing the keyword such as the "landscape" are searched.

Then, if the particular area, for example, "Kanto" is selected from the area list (STEP305), a list of the guidance courses, i.e., a name list of guidance courses that contain the first selected "landscape" as the keyword and are located in the Kanto district is displayed, as shown in FIG. 42C (STEP307).

Then, if the guidance course to be guided, for example, "beautiful valley, falls, and spring water visiting" is selected from the list (STEP308), contents of the selected guidance course, i.e., the guidance spots to be guided by the guidance course are displayed, as shown in FIG. 42D (STEP309).

In this event, various information such as the best season for sightseeing, recommended sightseeing times of the guidance spots, estimated moving times between the guidance spots, etc. may be added to the guidance courses stored in the database, and then such information may be displayed as the information of the guidance course by the operation of the course information output section 445. The user can utilize the displayed information as the criterion to select the guidance course.

For example, in the example in FIG. 42D, the criterions of the necessary times to visit the spots for sightseeing are set to 60 minutes, 60 minutes, 10 minutes, 10 minutes, and 10 minutes respectively, and also the criterions of the normal estimated moving times between the spots are set to 120 minutes, 100 minutes, 40 minutes, and 10 minutes respectively.

Then, if the guidance course is formally selected by performing the predetermined operation, e.g., selecting "OK" on the screen using the operation key by the operation of the course select section 446 (STEP310), the route calculate section 447 performs the route calculation based on the guidance course of "beautiful valley, falls, and spring water visiting" (STEP311). Then, the guide section 448 performs the route guidance along the calculated route (STEP312) . The concrete approach for the route calculation is free and thus the dixtra method, etc. may be selected and employed appropriately.

If there is no area data that corresponds to the selected keyword (STEP303) or if there is no pertinent course data in the selected area (STEP306), the error indicating that effect is displayed and then the process is returned to START of the process procedures.

### [2-4. Search based on the season]

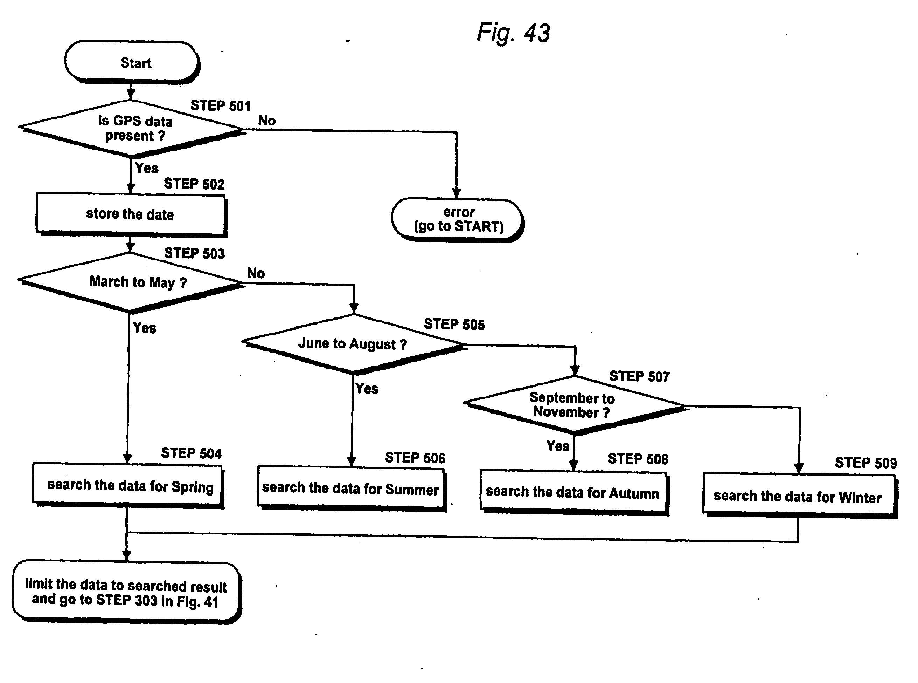

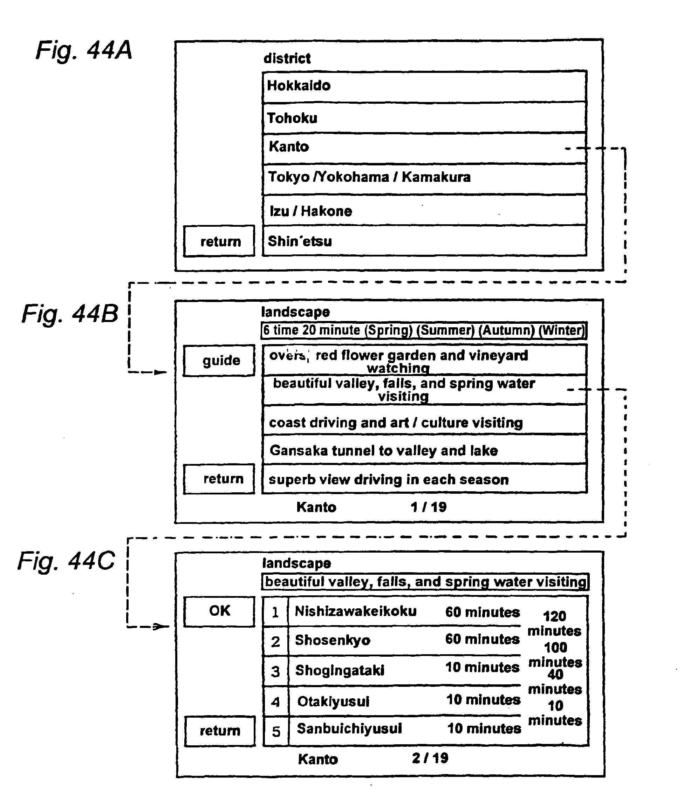

Next, FIG. 43 is a flowchart showing process procedures in the search based on the "this season course" . FIG. 44 is a view showing an example of the shift of the screen in the search based on the "this season course".

That is, if the "this season course" is selected from the search types displayed like FIG. 40, the season search section 443 refers to date information from the data (called "GPS data" hereinafter) employed in the GPS navigation (STEP502), and then executes the process for searching the guidance course that is correlated with the present season, based on the date information.

For example, March to May are set as spring (STEP503), June to August are set as summer (STEP505), September to November are set as autumn (STEP507), and remaining months are set as winter. According to above respective steps, the data of the guidance course for spring are searched (STEP504), the data of the guidance course for summer is searched (STEP506), the data of the guidance course for autumn is searched (STEP508), and the data of the guidance course for winter is searched (STEP509).

Then, the data as the objects of display and selection are limited to above searched result, and then similar processes to those (STEP303 and succeeding steps in FIG. 41) taken when the search based on the "keyword" is executed are carried out.

More particularly, for example, if the data based on GPS is March 3, it is decided that the season is spring (STEP503). Then, subsequent processes are applied to the data for spring as the object (STEP504). In this case, as shown in FIG. 44A, the area list contains the course data corresponding to "spring" is displayed on the screen, and then the guidance courses of the selected area (FIG. 44B) and the concrete contents of the guidance course (FIG. 44C) are displayed. Then, the process goes to the selected screen.

If there is no GPS data (STEP501), the error indicating that effect is displayed, and then the process is returned to START in the process procedures.

### [2-5. Search based on the area]

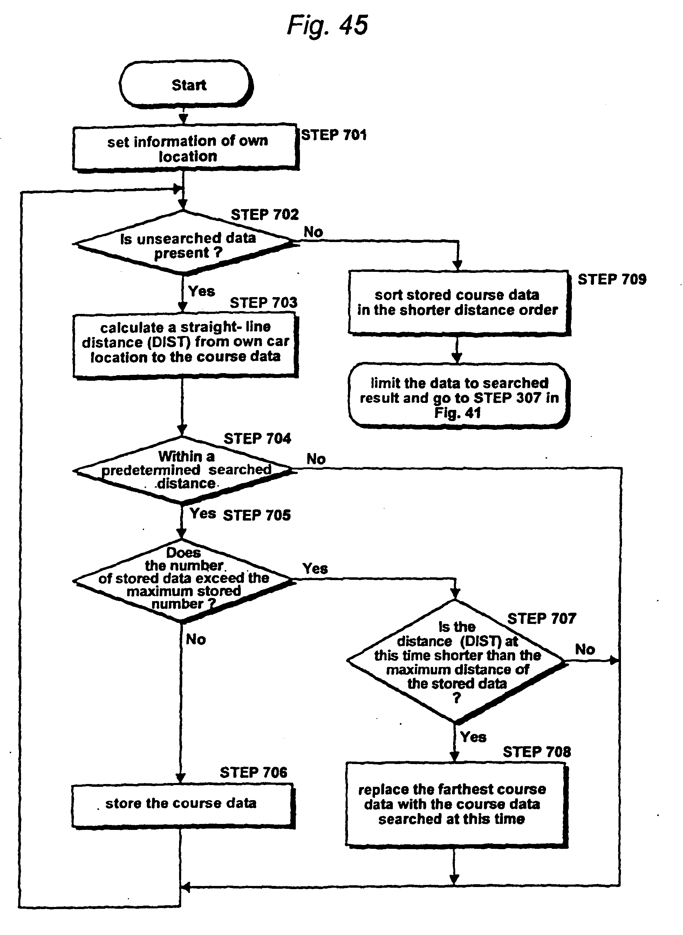

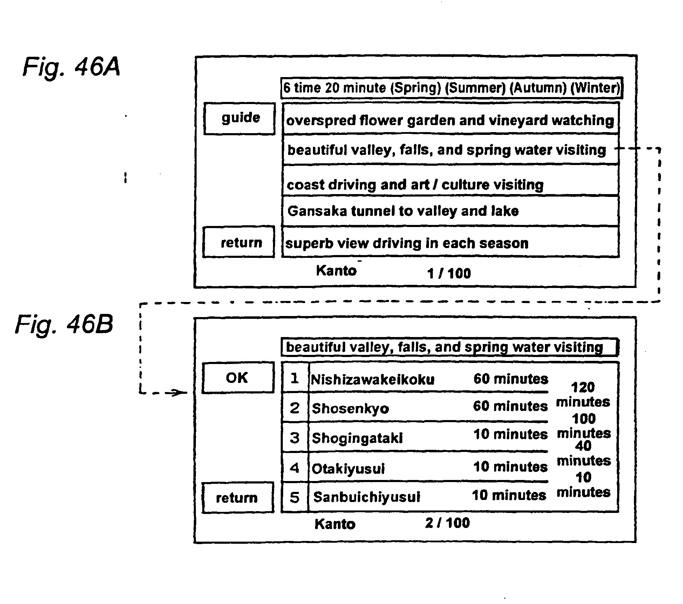

Then, FIG. 45 is a flowchart showing process procedures in the search based on the "neighboring course". FIG. 46 is a view showing an example of the shift of the screen in the search based on the "neighboring course". The "neighboring course" searches the guidance courses whose start points are located within a predetermined distance from the location of own car. In the case of the "destination neighboring course", the appointed destination is selected as a center in place of the own car location, but similar process procedures to those of the "neighboring course" are carried out. Therefore, the "neighboring course" will be explained concretely herein.

In the case of the "neighboring course", the number of the searched guidance courses and the predetermined distance from the own car location, i.e., the maximum distance are designated in advance. In this example, assume that 100 courses are appointed in order to the shorter distance such that they should be searched from the guidance courses being located within 100 km.

That is, if the "neighboring course" is selected from the items in FIG. 40, the area search section 444 gets the information of the present location of own car from the present location calculate section 440, and then sets such information as the center point of the search by storing it in DRAM 406, or the like (STEP701) . In this case, the course data as the search object may be limited roughly based on the area, etc.

Then, as far as unsearched data are present among the course data to be set as the search object (STEP702), a straight-line distance (DIST) as the distance from the own car location to the guidance course, more particularly, the distance up to the start point, i.e., the first guidance spot of the guidance course represented by the course data is calculated (STEP703).

Then, if the calculated distance is within a 100 km that is designated previously (STEP704), the course data are hit by the search. Thus, this guidance course is stored in a predetermined set area of the DRAM 406, or the like (STEP706).

In this case, if the number of the course data that is hit by the search and stored exceeds the maximum storing number, e.g., 100 pieces (STEP705), the distance DIST to reach the guidance course calculated at this time is compared with the straight-line distance of the farthest guidance course among stored 100 pieces (called the maximum distance hereinafter). If the distance (DIST) calculated at this time is shorter than the maximum distance of the stored data (STEP707), the farthest course data is replaced with the course data that are searched at this time (STEP708).

If no unsearched data can be found (STEP702) after the above processes are repeated, all the stored course data are sorted in order of the shorter distance (STEP709). The data as the object of display or selection are limited to the searched result as above, and then the processes that are similar to those taken when the search based on the "keyword" is executed (STEP307 and succeeding steps in FIG. 41) are carried out as the subsequent processes.

More particularly, for example, as shown in FIG. 46A, a plurality of searched guidance courses are displayed in order of the distances that are closer to the own car location, then the user selects the desired guidance course among them to display the content (FIG. 46B), and then the route calculation and the route guidance of the selected guidance course can be performed by executing the predetermined operation such as "OK" .

### [3. Advantages]

As described above, in the present example, values of the search keys such as theme, keyword, necessary time, object, etc. of respective guidance courses in addition to the contents of the guidance courses are stored previously in the recording medium such as the CD-ROM, then the available guidance courses are searched when the user designates the value of the search key by the operation of the search section 442, then such guidance courses are output as a display of list, etc. by the operation of the course information output section 445.. Therefore, the user can easily search the guidance course that meets the user' s desire among the output guidance courses.

Also, in the present example, by using singly or in combination the "theme" having the values such as "beautiful valley, falls, and spring water visiting", etc., the "keyword" having the values such as "landscape", "lower", etc., the "necessary times" having the values such as "○ time ○minute", etc., and the "object" having the values such as "Nishizawakeikoku", "Shosenkyo", etc. as the search keys, the guidance courses can be searched in detail by the operation of the search section 442. Therefore, the user can easily search the guidance course to meet the user's desire.

Also, in the present example, the optimum guidance course that is appropriate to the present season can be searched by the operation of the season search section 443, based on the date information obtained from a timer, i.e., a timer function of GPS (Global Positioning System).

Also, in the present example, since the guidance course near the own car location can be searched and displayed by the operation of the area search section 444, the guidance course that is easily available in location can be easily selected. Also, in the present example, since the guidance course near the destination can be searched and displayed by the operation of the area search section 444, the guidance course that is easily available from the destination in location can be easily selected when the user wishes to travel to the destination preferentially.

Also, in the present example, if the guidance courses that are located within the predetermined distance from the own car location or the destination are searched by the operation of the area search section 444, the user can easily select the guidance course to meet the user' s desire even when the user wishes to start quickly the sightseeing by deciding the locations of the guidance courses based on their start points.

Also, in the present example, if the multi-stage focusing search or the multiple condition search can be executed by combining plural search keys mutually, by using them and the season or area condition in combination, etc. by utilizing the operations of the search section 442, the season search section 443, and the area search section 444, the user can easily search the guidance course that satisfies the user's desire.

Also, in the present example, if a plurality of guidance courses that are located near the own car location are searched, the guidance courses are listed up in order to the shorter distance by the operation of the course information output section 445. Therefore, the user can easily select the guidance course that is easily available in location from a plurality of guidance courses.

Also, in the present example, when the searched guidance courses are displayed as a list, etc., the necessary times to trace respective guidance courses are displayed by the operation of the course information output section 445. Therefore, the user can easily select the optimum guidance course in connection with the driving time.

Also, in the present example, when the contents of the guidance courses are displayed, detailed information such as the necessary times of respective spots such as "recommended time for sightseeing", the moving times between the spots such as "estimated moving time up to next guidance spot", etc. are also displayed by the operation of the course information output section 445. Therefore, the user can easily select the guidance course to meet the user's desire.

### [4. Other example]

For example, the present invention may be applied to not only the car but also other type of mobile body such as the motor bicycle. Moreover, details such as the number of previously prepared guidance courses, the number of spots contained in individual guidance courses, the contents of the route guidance, etc. can be set freely.

Besides, the criterion to decide whether or not the location of the guidance course is within the predetermined distance may be defined freely. For example, not only the start point of the guidance course but also the end point or the center of gravity in the location may be used as the criterion. In addition, the overall guidance course, a predetermined rate at which a part of the guidance course is contained within the predetermined distance, etc. may be set as the criterion.

Furthermore, the concrete contents of the search keys may be set freely. For example, the searches based on the season and the area may be executed by a single search section using the search key. Also, it is not indispensable to output the searches based on the season and the area, the multi-stage focusing search or the multiple condition search, and the guidance courses together with the necessary times and the moving times.

As described above, according to the present invention, the navigation technology, i.e., the navigation system and method capable of searching easily the guidance course that meets to the user's desire and the recording medium for recording the navigation softwares can be provided. Therefore, the convenience of operating the navigation can be improved.

## Claims

1. A navigation system for guiding a route of a mobile body, comprising:
section (143) for selecting a desired guidance course from a predetermined start point (P1) to a predetermined end point (P5) containing routing spots (P1 - P5) from guidance courses that traces routing spots;
section (141) for calculating a present location of the mobile body;
the navigation system further **characterized in** comprising:
section (147) for comparing to which one of a start point and an end point of the guidance course the present location is close if the guidance course is selected;
section (149) for selecting by a user whether or not the routing order is to be inverted if the present location is close to the end point;
section (148) for inverting a routing order of routing spots contained in the guidance course if the user has selected that the routing order of routing spots is to be inverted; and
section for calculating a route via the routing spots in the selected routing order of the selected guidance course.

2. A navigation method of guiding a route of a mobile body, comprising the steps of:
selecting a desired guidance course from a predetermined start point (P1) to a predetermined end point (P5) from guidance courses that traces previously decided routing spots (P1 - P5);
calculating a present location of the mobile body;
the navigation method further **characterized in** comprising the steps of:
comparing to which one of a start point and an end point of the guidance course the present location is close if the guidance course is selected;
selecting by a user whether or not the routing order is to be inverted if the present location is close to the end point;
inverting a routing order of routing spots contained in the guidance course if the user has selected that the routing order of routing spots is to be inverted; and
calculating a route via the routing spots in the selected routing order of the selected guidance course.

3. A recording medium containing navigation software, wherein the software causes the computer to
receive a selection of a desired guidance course from a predetermined start point (P1) to a predetermined end point (P5) from guidance courses that traces previously decided routing spots (P1 - P5);
calculate a present location of the mobile body;
compare to which one of a start point and an end point of the guidance course the present location is close if the guidance course is selected;
receive a selection by a user whether or not the routing order is to be inverted if the present location is close to the end point;
invert a routing order of routing spots contained in the guidance course if the user has selected that the routing order of routing spots is to be inverted; and
calculate a route via the routing spots in the selected routing order of the selected guidance course.

## Patentansprüche

1. Ein Navigationssystem zum Führen eines Weges eines mobilen Körpers, umfassend eine Einheit (143) um einen gewünschten Führungskurs von einem vorgegebenen Startpunkt (P1) zu einem vorgegebenen Endpunkt (P5) auszuwählen, der Wegpunkte (P1 - P5) von Führungskursen umfasst, die Wegpunkten folgen;
eine Einheit (141) zum Berechnen der aktuellen Position des mobilen Körpers;
das Navigationssystem **dadurch gekennzeichnet, dass** es weiterhin umfasst:
eine Einheit (147) zum Vergleichen zu welchem von einem Startpunkt und einem Endpunkt des Führungskurses die aktuelle Position nahe ist, wenn der Führungskurs ausgewählt ist;
eine Einheit (149) zum Auswählen durch einen Benutzer, ob die Weganordnung umgekehrt werden muss oder nicht, wenn die aktuelle Position nahe dem Endpunkt ist;
eine Einheit (148) zum Umkehren einer Weganordnung von Wegpunkten, die in dem Führungskurs enthalten sind, wenn der Benutzer ausgewählt hat, dass die Weganordnung von Wegpunkten umgekehrt werden muss; und
eine Einheit zum Berechnen eines Weges über die Wegpunkte in der ausgewählten Weganordnung des ausgewählten Führungskurses.

2. Ein Navigationsverfahren zum Führen eines Weges eines mobilen Körpers, umfassend die Schritte:
Auswählen eines gewünschten Führungskurses von einem vorgegebenen Startpunkt (P1) zu einem vorgegebenen Endpunkt (P5), der Wegpunkte von Führungskursen umfasst, die vorher bestimmten Wegpunkten (P1 - P5) folgen;
Berechnen der aktuellen Position des mobilen Körpers;
das Navigationsverfahren weiterhin **dadurch gekennzeichnet, dass** es die folgenden Schritte umfasst:
Vergleichen zum welchem von einem Startpunkt und einem Endpunkt des Führungskurses die aktuelle Position nahe ist, wenn der Führungskurs ausgewählt ist;
Auswählen durch einen Benutzer, ob die Weganordnung umgekehrt werden muss oder nicht, wenn die aktuelle Position nahe dem Endpunkt ist;
Umkehren einer Weganordnung von Wegpunkten, die in dem Führungskurs enthalten sind, wenn der Benutzer ausgewählt hat, dass die Weganordnung von Wegpunkten umgekehrt werden muss; und
Berechnen eines Weges über die Wegpunkte in der ausgewählten Weganordnung des ausgewählten Führungskurses.

3. Ein Speichermedium, das Navigationssoftware umfasst, wobei die Navigationssoftware den Computer veranlasst:
eine Auswahl eines gewünschten Führungskurses von einem vorgegebenen Startpunkt (P1) zu einem vorgegebenen Endpunkt (P5) zu empfangen, der Wegpunkte von Führungskursen umfasst, die vorher bestimmten Wegpunkten (P1 - P5) folgen;
die aktuelle Position des mobilen Körpers zu berechnen;
zu vergleichen zu welchem von einem Startpunkt und einem Endpunkt des Führungskurses die aktuelle Position nahe ist, wenn der Führungskurs ausgewählt ist;
eine Auswahl von einem Benutzer zu empfangen, ob die Weganordnung umgekehrt werden muss oder nicht, wenn die aktuelle Position nahe dem Endpunkt ist;
eine Weganordnung von Wegpunkten, die in dem Führungskurs enthalten sind, umzukehren, wenn der Benutzer ausgewählt hat, dass die Weganordnung von Wegpunkten umgekehrt werden muss; und
Einen Weg über die Wegpunkte in der ausgewählten Weganordnung des ausgewählten Führungskurses zu berechnen.

## Revendications

1. Système de navigation destiné à guider un itinéraire d'un corps mobile, comprenant :
une section (143) pour sélectionner un trajet de guidage souhaité d'un point de début prédéterminé (P1) à un point de fin prédéterminé (P5) contenant des points de routage (P1 à P5), parmi des trajets de guidage, qui suit des points de routage ;
une section (141) pour calculer un emplacement actuel du corps mobile ;
le système de navigation étant **caractérisé en outre en ce qu'**il comprend :
une section (147) pour déterminer par comparaison duquel d'un point de début et d'un point de fin du trajet de guidage l'emplacement actuel est proche si le trajet de guidage est sélectionné ;
une section (149) pour sélectionner, par un utilisateur, si, oui ou non, l'ordre de routage doit être inversé si l'emplacement actuel est proche du point de fin ;
une section (148) pour inverser un ordre de routage des points de routage contenus dans le trajet de guidage si l'utilisateur a déterminé par sélection que l'ordre de routage des points de routage doit être inversé ; et
une section pour calculer un trajet via les points de routage dans l'ordre de routage sélectionné du trajet de guidage sélectionné.

2. Procédé de navigation consistant à guider un itinéraire d'un corps mobile, comprenant les étapes consistant à :
sélectionner un trajet de guidage souhaité d'un point de début prédéterminé (P1) à un point de fin prédéterminé (P5), parmi des trajets de guidage, qui suit des points de routage (P1 à P5) décidés précédemment ;
calculer un emplacement actuel du corps mobile ;
le procédé de navigation étant en outre **caractérisé en ce qu'**il comprend les étapes consistant à :
déterminer par comparaison duquel d'un point de début et d'un point de fin du trajet de guidage l'emplacement actuel est proche si le trajet de guidage est sélectionné ;
déterminer par sélection, par un utilisateur, si, oui ou non, l'ordre de routage doit être inversé si l'emplacement actuel est proche du point de fin ;
inverser un ordre de routage des points de routage contenus dans le trajet de guidage si l'utilisateur a déterminé par sélection que l'ordre de routage des points de routage doit être inversé ; et
calculer un trajet via les points de routage dans l'ordre de routage sélectionné du trajet de guidage sélectionné.

3. Support d'enregistrement contenant un logiciel de navigation, dans lequel le logiciel amène l'ordinateur à
recevoir une sélection d'un trajet de guidage souhaité d'un point de début prédéterminé (P1) à un point de fin prédéterminé (P5), parmi des trajets de guidage, qui suit des points de routage (P1 à P5) décidés précédemment ;
calculer un emplacement actuel du corps mobile ; déterminer par comparaison duquel d'un point de début et d'un point de fin du trajet de guidage l'emplacement actuel est proche si le trajet de guidage est sélectionné ;
recevoir une sélection, par un utilisateur, de l'inversion ou non de l'ordre de routage si l'emplacement actuel est proche du point de fin ;
inverser un ordre de routage des points de routage contenus dans le trajet de guidage si l'utilisateur a déterminé par sélection que l'ordre de routage des points de routage doit être inversé ; et
calculer un trajet via les points de routage dans l'ordre de routage sélectionné du trajet de guidage sélectionné.
